(19) Europäisches Patentamt
European Patent Office
Office européen des brevets

(11) **EP 4 398 008 A1**

(12) **EUROPEAN PATENT APPLICATION**
published in accordance with Art. 153(4) EPC

(43) Date of publication:
**10.07.2024 Bulletin 2024/28**

(21) Application number: **22864581.8**

(22) Date of filing: **30.08.2022**

(51) International Patent Classification (IPC):
**G02B 6/036** (2006.01)    **G02B 6/44** (2006.01)

(52) Cooperative Patent Classification (CPC):
**G02B 6/036; G02B 6/44**

(86) International application number:
**PCT/JP2022/032650**

(87) International publication number:
**WO 2023/032999 (09.03.2023 Gazette 2023/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.08.2021 JP 2021141607**

(71) Applicant: SUMITOMO ELECTRIC INDUSTRIES, LTD.
**Osaka-shi, Osaka 541-0041 (JP)**

(72) Inventors:
- **MORITA Keisei**
  **Osaka-shi, Osaka 541-0041 (JP)**
- **SAITO Takahiro**
  **Osaka-shi, Osaka 541-0041 (JP)**
- **SOHMA Kazuyuki**
  **Osaka-shi, Osaka 541-0041 (JP)**
- **NOMURA Takahiro**
  **Osaka-shi, Osaka 541-0041 (JP)**

(74) Representative: **TBK**
**Bavariaring 4-6**
**80336 München (DE)**

(54) **OPTICAL FIBER**

(57) The optical fiber comprises a glass fiber including a core and a cladding. The cladding includes an inner cladding surrounding an outer periphery of the core, a trench surrounding an outer periphery of the inner cladding, and an outer cladding surrounding an outer periphery of the trench. The inner cladding has a refractive index lower than a refractive index of the core. The trench has a refractive index lower than the refractive index of the inner cladding. The outer cladding has a refractive index higher than the refractive index of the trench and lower than the refractive index of the core. The core is doped with germanium. The inner cladding has an average chlorine mass concentration of 500 ppm or more and 5000 ppm or less. $r2/r1$ is 2.2 or more and 3.6 or less, $r3 - r2$ is 3 $\mu m$ or more and 10 $\mu m$ or less, $\Delta 1 - \Delta 2$ is 0.15% or more and 0.40% or less, $|\Delta 2|$ is 0.10% or less, and $\Delta 3$ is -0.70% or more and -0.10% or less, where $\Delta 1$ is a relative refractive index difference of the core with respect to the refractive index of the outer cladding, $\Delta 2$ is a relative refractive index difference of the inner cladding with respect to the refractive index of the outer cladding, $\Delta 3$ is a relative refractive index difference of the trench with respect to the refractive index of the outer cladding, $r1$ is a radius of the outer periphery of the core, $r2$ is a radius of the outer periphery of the inner cladding, and $r3$ is a radius of the outer periphery of the trench. A mode field diameter for light at a wavelength of 1310 nm is 8.8 $\mu m$ or more and 9.6 $\mu m$ or less. A bending loss for light at a wavelength of 1625 nm is 1.0 dB or less per turn when the optical fiber is wound on a mandrel having a diameter of 15 mm. A bending loss for light at a wavelength of 1625 nm is 0.1 dB or less per 10 turns when the optical fiber is wound on a mandrel having a diameter of 30 mm. A zero-dispersion wavelength is 1300 nm or more and 1324 nm or less. A cable cutoff wavelength is 1260 nm or less.

EP 4 398 008 A1

# Fig.1

**Description**

**Technical Field**

The present disclosure relates to an optical fiber. This application is based upon and claims the benefit of priority from Japanese Application No. 2021-141607 filed on August 31, 2021, the entire contents of which are incorporated herein by reference.

**Background Art**

Patent Literature 1 describes an optical fiber. The optical fiber includes a central core portion, an intermediate layer formed on an outer periphery of the central core portion, a trench layer formed on an outer periphery of the intermediate layer, and a cladding portion formed on an outer periphery of the trench layer. When defining a relative refractive index difference of the central core portion with respect to the cladding portion as Δ1, a relative refractive index difference of the intermediate layer with respect to the cladding portion as Δ2, and a relative refractive index difference of the trench layer with respect to the cladding portion as Δ3, Δ1>Δ2>Δ3 and 0>Δ3 are satisfied. Δ1 is 0.36% or more and 0.40% or less. Δ2 is-0.05% or more and 0.05% or less. |Δ3| is 0.25% or less. Δ1×|Δ3| is 0.08%² or less. When defining the inner diameter of the trench layer as 2b and the outer diameter of the trench layer as 2c, (c-b) is less than 4.5 μm.

Patent Literature 2 describes an optical fiber. The optical fiber comprises a four layer structure of a core, an inner cladding, a trench, and an outer cladding. The multiplier α of the refractive index distribution of the core is larger than 5. 1.2 mass% or more of Cl is doped to the outer cladding. The mode field diameter at a wavelength of 1.31 μm is in a range of 9.0 μm to 9.5 μm.

Patent Literature 3 describes an optical fiber. The optical fiber comprises a glass fiber having a diameter of 125 μm, a primary coating, and a secondary coating. The substantially cured primary coating has an in situ elastic modulus of less than 0.65 MPa and a glass-transition temperature of -50 °C or less. The primary coating has an outer diameter of 135 μm to 175 μm.

Patent Literature 4 describes an optical fiber. The optical fiber comprises a four layer structure of a core, an inner cladding, a trench, and an outer cladding. The following conditions are satisfied, where $\Delta_1$ is a refractive index of the core, $r_1$ is a radius of the core, $\Delta_2$ is a refractive index of the inner cladding, $r_2$ is a radius of the inner cladding, $\Delta_3$ is a refractive index of the trench, $r_3$ is a radius of the trench, $V_3$ is a volume of the trench, $\Delta_4$ is a refractive index of the outer cladding, and $r_4$ is a radius of the outer cladding.

i)

$$\Delta_1 > \Delta_2 > \Delta_4 > \Delta_3$$

ii)

$$0.005\% \leq \Delta_2 - \Delta_4 \leq 0.05\%$$

iii)

$$15 \ \mu m - r_2 \leq 25 \ \mu m$$

iv)

$$30 \ \Delta\% \cdot \mu m^2 \ |V_3| \leq 80 \ \Delta\% \cdot \mu m^2$$

v) A mode field diameter at a wavelength of 1310 nm is 9.0 μm or more and 9.5 μm or less.

vi) At a wavelength of 1550 nm, a bending loss at a bending radius 15 mm is 0.5 dB/turn or less, a bending loss at a bending radius 20 mm is 0.2 dB/turn or less, and a bending loss at a bending radius 30 mm is 0.005 dB/turn or less.

**Citation List**

**Patent Literature**

Patent Literature 1: Japanese Unexamined Patent Publication No. 2020-129037
Patent Literature 2: PCT International Publication No. WO2017/172714
Patent Literature 3: PCT International Publication No. WO2010/053356
Patent Literature 4: United States Patent Application Publication No. 2021/0041623

**Summary of Invention**

An optical fiber according to an aspect of the present disclosure comprises a glass fiber including a core and a cladding. The cladding includes an inner cladding surrounding an outer periphery of the core, a trench surrounding an outer periphery of the inner cladding, and an outer cladding surrounding an outer periphery of the trench. The inner cladding has a refractive index lower than a refractive index of the core. The trench has a refractive index lower than the refractive index of the inner cladding. The outer cladding has a refractive index higher than the refractive index of the trench and lower than the refractive index of the core. The core is doped with germanium. The inner cladding has an average chlorine mass concentration of 500 ppm or more and 5000 ppm or less. r2/r1 is 2.2 or more and 3.6 or less, r3 - r2 is 3 $\mu$m or more and 10 $\mu$m or less, $\Delta$1 - $\Delta$2 is 0.15% or more and 0.40% or less, |$\Delta$2| is 0.10% or less, and $\Delta$3 is -0.70% or more and -0.10% or less, where $\Delta$1 is a relative refractive index difference of the core with respect to the refractive index of the outer cladding, $\Delta$2 is a relative refractive index difference of the inner cladding with respect to the refractive index of the outer cladding, $\Delta$3 is a relative refractive index difference of the trench with respect to the refractive index of the outer cladding, r1 is a radius of the outer periphery of the core, r2 is a radius of the outer periphery of the inner cladding, and r3 is a radius of the outer periphery of the trench. A mode field diameter for light at a wavelength of 1310 nm is 8.8 $\mu$m or more and 9.6 $\mu$m or less. A bending loss for light at a wavelength of 1625 nm is 1.0 dB or less per turn when the optical fiber is wound on a mandrel having a diameter of 15 mm. A bending loss for light at a wavelength of 1625 nm is 0.1 dB or less per 10 turns when the optical fiber is wound on a mandrel having a diameter of 30 mm. A zero-dispersion wavelength is 1300 nm or more and 1324 nm or less. A cable cutoff wavelength is 1260 nm or less.

**Brief Description of Drawings**

FIG. 1 is a diagram illustrating a cross section perpendicular to an axial direction of an optical fiber according to a first embodiment.

FIG. 2 is a diagram showing the refractive index distribution in a radial direction of a glass fiber.

FIG. 3 is a graph showing the relationship between the dispersion (3$\sigma$) in an outer diameter variation of the glass fiber and a proportion of the optical fiber having a transmission loss of 0.32 dB/km or less at a wavelength of 1.31 $\mu$m.

FIG. 4 is a schematic view for explaining the definition of an eccentric amount of the glass fiber.

FIG. 5 is a diagram of an eccentric amount waveform showing the eccentric amount of the glass fiber with respect to the position in the axial direction of the glass fiber.

FIG. 6 is a diagram illustrating an example of a spectrum obtained by Fourier transforming the eccentric amount waveform.

FIG. 7 is a schematic configuration diagram illustrating an optical fiber production apparatus according to the present embodiment.

FIG. 8 is a diagram illustrating a cross section perpendicular to the axial direction of the optical fiber according to the third embodiment.

FIG. 9 is a diagram illustrating a cross section perpendicular to the axial direction of an optical fiber as a Modification Example of the third embodiment.

**Description of Embodiments**

[Problem to be solved by present disclosure]

In order to reduce a connection loss of an optical fiber, it is effective to reduce the difference in mode field diameter (MFD) between two optical fibers connected to each other. While the center MFD ($\lambda$=1.31 $\mu$m) of an optical

fiber (so-called general-purpose fiber) used in a generally laid optical cable is 9.2 $\mu$m, the center MFD ($\lambda$=1.31 $\mu$m) of a conventional bending-resistant fiber is 8.6 $\mu$m, and there is an MFD difference of 0.6 $\mu$m on average. Therefore, in order to reduce the connection loss of the optical fiber, it is effective to increase the MFD of the bending-resistant fiber. However, in general, when the MFD is increased while maintaining the outer diameter (125 $\mu$m $\pm$ 0.5 $\mu$m) of a glass fiber, the bending loss increases. In order to suppress the transmission loss of an optical fiber to a low level, it is also important to prevent an increase in bending loss.

[Effects of Present Disclosure]

According to the present disclosure, it is possible to provide an optical fiber capable of increasing an MFD while suppressing an increase in bending loss.

[Description of Embodiments of the Present Disclosure]

First, contents of embodiments of the present disclosure will be listed and described. An optical fiber according to an aspect of the present disclosure includes a glass fiber including a core and a cladding. The cladding includes an inner cladding surrounding an outer periphery of the core, a trench surrounding an outer periphery of the inner cladding, and an outer cladding surrounding an outer periphery of the trench. The inner cladding has a refractive index lower than a refractive index of the core. The trench has a refractive index lower than the refractive index of the inner cladding. The outer cladding has a refractive index higher than the refractive index of the trench and lower than the refractive index of the core. The core is doped with germanium. The inner cladding has an average chlorine mass concentration of 500 ppm or more and 5000 ppm or less. r2/r1 is 2.2 or more and 3.6 or less, r3 - r2 is 3 $\mu$m or more and 10 $\mu$m or less, $\Delta$1 - $\Delta$2 is 0.15% or more and 0.40% or less, |$\Delta$2| is 0.10% or less, and $\Delta$3 is -0.70% or more and -0.10% or less, where $\Delta$1 is a relative refractive index difference of the core with respect to the refractive index of the outer cladding, $\Delta$2 is a relative refractive index difference of the inner cladding with respect to the refractive index of the outer cladding, $\Delta$3 is a relative refractive index difference of the trench with respect to the refractive index of the outer cladding, r1 is a radius of the outer periphery of the core, r2 is a radius of the outer periphery of the inner cladding, and r3 is a radius of the outer periphery of the trench. A mode field diameter for light at a wavelength of 1310 nm is 8.8 $\mu$m or more and 9.6 $\mu$m or less. A bending loss of the optical fiber for light at a wavelength of 1625 nm is 1.0 dB or less per turn when the optical fiber is wound on a mandrel having a diameter of 15 mm. A bending loss of the optical fiber for light at a wavelength of 1625 nm is 0.1 dB or less per 10 turns when the optical fiber is wound on a mandrel having a diameter of 30 mm. A zero-dispersion wavelength is 1300 nm or more and 1324 nm or less. A cable cutoff wavelength is 1260 nm or less.
The optical fiber having these parameters makes it possible to increase the mode field diameter while suppressing an increase in bending loss.
A bending loss for light at a wavelength of 1625 nm may be $1.0\times10^{-4}$ dB or less per turn when the above-described optical fiber is wound around a mandrel having a diameter of 100 mm.
A wavelength dispersion for light at a wavelength of 1550 nm in the above-described optical fiber may be 18.6 ps/(nm·km) or less, and a zero-dispersion slope of the above-described optical fiber may be 0.092 ps/(nm$^2$·km) or less.
A transmission loss for light at a wavelength of 1383 nm in the above-described optical fiber may be 0.35 dB/km or less.
In the above-described optical fiber, 3$\sigma$ may be 0.1 $\mu$m or more and 0.5 $\mu$m or less, where $\sigma$ is a standard deviation of an outer diameter variation in an axial direction of the glass fiber.
In the above-described optical fiber, an average chlorine mass concentration of the outer cladding may be substantially zero, and an average OH mass concentration of the outer cladding may be 5 ppm or more and 500 ppm or less.
The optical fiber may further include a coating resin layer coating an outer periphery of the glass fiber. The coating resin layer may include a primary resin layer that is in contact with the glass fiber and surrounds the glass fiber, and a secondary resin layer that surrounds an outer periphery of the primary resin layer. The thickness of the primary resin layer may be 7.5 $\mu$m or more and 17.5 $\mu$m or less. The Young modulus of the primary resin layer may be 0.10 MPa or greater and 0.50 MPa or less at 23°C. The thickness of the secondary resin layer may be 5.0 $\mu$m or more and 17.5 $\mu$m or less. The outer diameter of the secondary resin layer may be 165 $\mu$m or more and 175 $\mu$m or less. The Young modulus of the secondary resin layer may be 1200 MPa or greater and 2800 MPa or less at 23°C.
The optical fiber may further include a coating resin layer coating an outer periphery of the glass fiber. The coating resin layer may include a primary resin layer that is in contact with the glass fiber and coats the glass fiber, a secondary resin layer that coats an outer periphery of the primary resin layer, and a first colored layer that coats an outer periphery of the secondary resin layer. A thickness of the primary resin layer may be 7.5 $\mu$m or more and 17.5 $\mu$m or less. A Young modulus of the primary resin layer may be 0.10 MPa or greater and 0.60 MPa or less at 23°C. A thickness of the secondary resin layer may be 5.0 $\mu$m or more and 17.5 $\mu$m or less. An outer diameter of the secondary resin layer

may be 165 μm or more and 175 μm or less. A Young modulus of the secondary resin layer may be 1200 MPa or greater and 2800 MPa or less at 23°C.

In the above-described optical fiber, the coating resin layer may further include a second colored layer having a color different from that of the first colored layer and formed between the secondary resin layer and the first colored layer. The second colored layer may include a plurality of ring patterns formed at intervals in an axial direction of the glass fiber.

In a spectrum obtained by measuring an amount of eccentricity of the glass fiber from a central axis with reference to an outer periphery of the secondary resin layer at a plurality of measurement points set at predetermined intervals in an axial direction of the glass fiber and performing Fourier transform on a waveform indicating the amount of eccentricity at each of the plurality of measurement points, a maximum value of an amplitude of the amount of eccentricity may be 6 μm or less.

[Details of Embodiment of the Present Disclosure]

Specific examples of the optical fiber according to the present embodiment will be described with reference to the drawings as necessary. The present invention is not limited to these examples, but is defined by the scope of claims and is intended to include all modifications within the meaning and scope equivalent to the scope of claims. In the following description, the same reference numerals are given to the same elements in the description of the drawings, and redundant description will be omitted. In the following description, the "outer diameter" of a certain element refers to an average value of outer diameters of the element at a plurality of positions in the axial direction of the optical fiber. Similarly, the "thickness" of an element refers to an average value of the thickness of the element at a plurality of positions in the axial direction of the optical fiber.

(First Embodiment)

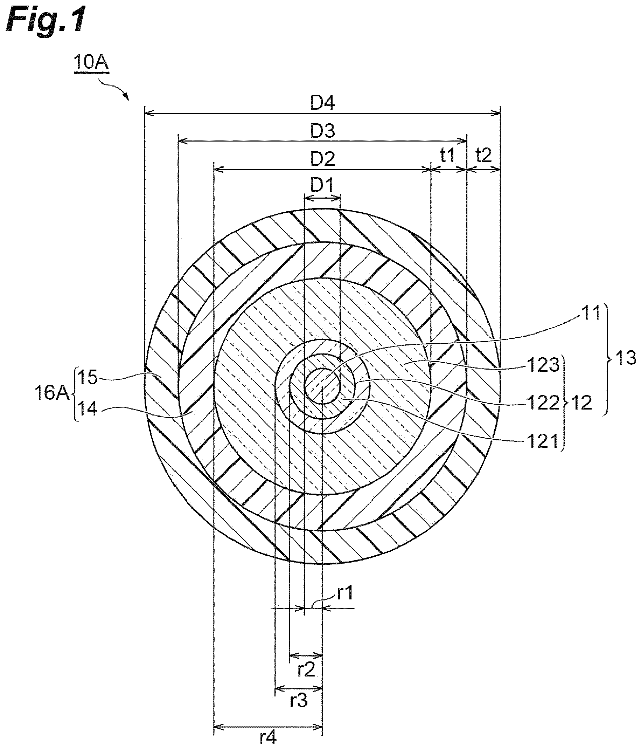

FIG. 1 is a diagram illustrating a cross-section perpendicular to the axial direction of an optical fiber 10A according to a first embodiment. The optical fiber 10A is a so-called optical fiber element wire and conforms to at least one of the specifications of ITU-T G.652 and the specifications of ITU-T G.657. Conforming to the specifications of ITU-T G.652 means conforming to at least one of G.652.A, G.652.B, G.652.C, and G.652.D. Conforming to the specifications of ITU-T G.657 means conforming to at least one of G.657.A and G.657.B. The optical fiber 10A includes: a glass fiber 13 including a core 11 and a cladding 12; and a coating resin layer 16A including a primary resin layer 14 provided on the outer periphery of the glass fiber 13, and a secondary resin layer 15.

The cladding 12 surrounds the core 11. The core 11 and the cladding 12 mainly contain glass such as quartz glass. The core 11 is made of a material obtained by adding germanium (Ge) to pure silica glass, for example. Here, the pure silica glass does not substantially contain impurities.

The outer diameter D2 of the glass fiber 13, that is, the outer diameter of the cladding 12 is 125 μm ± 0.5 μm, that is, 124.5 μm or more and 125.5 μm or less, and the diameter D1 of the core 11 is 6.0 μm or more and 12.0 μm or less. Since the outer diameter D2 of the glass fiber 13 is the same as the outer diameter of general glass fibers as such, general optical fibers can be used for peripheral tools such as connectors and peripheral instruments such as a fusion machine, and replacement of existing optical fibers is easily achieved. For example, the optical fiber 10A can be easily applied to microduct cables, ultra-multicore cables for data center, and other various cables.

The cladding 12 includes an inner cladding 121, a trench 122, and an outer cladding 123. The inner cladding 121 surrounds the outer periphery of the core 11 and is in contact with the outer peripheral surface of the core 11. The trench 122 surrounds the outer periphery of the inner cladding 121 and is in contact with the outer peripheral surface of the inner cladding 121. The outer cladding 123 surrounds the outer periphery of the trench 122 and is in contact with the outer peripheral surface of the trench 122. For the inner cladding 121, quartz glass doped with chlorine (Cl) can be used. The average chlorine mass concentration of the inner cladding 121 is, for example, 500 ppm or more and 5000 ppm or less, or, for example, 500 ppm or more and 3000 ppm or less. For the trench 122, quartz glass doped with fluorine can be used. Pure silica glass can be used for the outer cladding 123. The average chlorine mass concentration of the outer cladding 123 is, for example, substantially zero. Here, "substantially zero" means that the value is 50 ppm or less, specifically. The average OH mass concentration of the outer cladding 123 is, for example, 5 ppm or more and 500 ppm or less, or, for example, 5 ppm or more and 200 ppm or less. The average chlorine mass concentration and the average OH mass concentration of the outer cladding 123 are achieved by, for example, sintering the outer cladding 123 in a vacuum atmosphere.

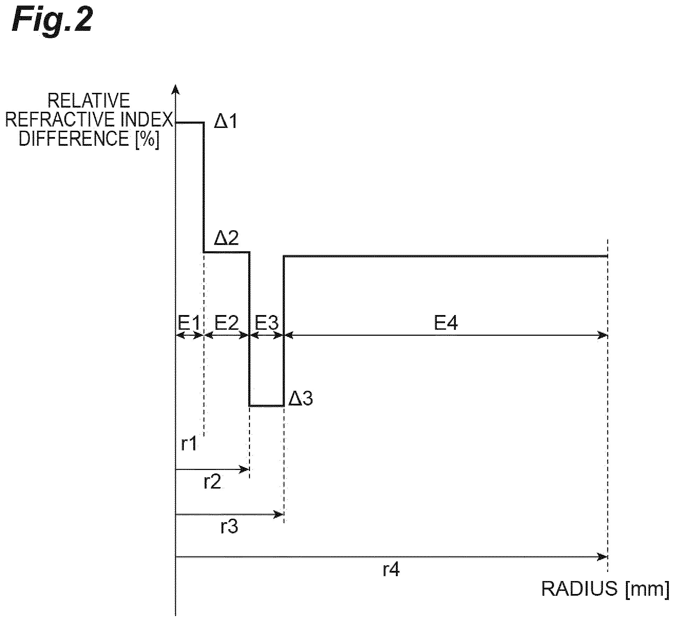

FIG. 2 is a diagram showing the refractive index distribution in the radial direction of the glass fiber 13. In FIG. 2, a range E1 corresponds to the core 11, a range E2 corresponds to the inner cladding 121, a range E3 corresponds to the trench 122, and a range E4 corresponds to the outer cladding 123. The vertical axis represents the relative refractive index difference, and the horizontal axis represents the radial directional position. As shown in FIG. 2, in the glass fiber 13, the relative refractive index differences of the core 11, the inner cladding 121, and the trench 122 with respect to the refractive index of the outer cladding 123 are denoted by Δ1, Δ2, and Δ3, respectively. In this case, the relative refractive index difference Δ2 of the inner cladding 121 is smaller than the relative refractive index difference Δ1 of the core 11. In other words, the refractive index of the inner cladding 121 is smaller than the refractive index of the core 11. The relative refractive index difference Δ3 of the trench 122 is smaller than the relative refractive index difference Δ2 of the inner cladding 121. In other words, the refractive index of the trench 122 is smaller than the refractive index of the inner cladding 121. The sign of the relative refractive index difference Δ3 of the trench 122 is negative, and the sign of the relative refractive index difference Δ1 of the core 11 is positive. The sign of the relative refractive index difference being negative means that the refractive index is smaller than the refractive index of the outer cladding 123.

A value (Δ1 - Δ2) obtained by subtracting the relative refractive index difference Δ2 of the inner cladding 121 from the relative refractive index difference Δ1 of the core 11 is 0.15% or more and 0.40% or less. In one embodiment, the value (Δ1 - Δ2) is 0.34%. Since the value (Δ1 - Δ2) is relatively small like this, the mode field diameter of the optical fiber 10D can be increased. The absolute value |Δ2| of the relative refractive index difference Δ2 of the inner cladding 121 is 0.10% or less. The relative refractive index difference Δ3 of the trench 122 is -0.70% or more and -0.10% or less. When the relative refractive index difference Δ3 of the trench 122 is within such a range, it is not necessary to extremely increase the doping amount of fluorine in the step of sintering glass. The relative refractive index difference Δ3 of the trench 122 may be less than -0.25%. In one embodiment, the relative refractive index difference Δ1 of the core 11 is 0.35%, the relative refractive index difference Δ2 of the inner cladding 121 is 0.02%, and the relative refractive index difference Δ3 of the trench 122 is -0.30%.

As shown in FIGS. 1 and 2, it is assumed that the radius of the outer periphery of the core 11 is r1, the radius of the outer periphery of the inner cladding 121 is r2, and the radius of the outer periphery of the trench 122 is r3. In this case, a value (r2/r1) obtained by dividing the radius r2 of the inner cladding 121 by the radius r1 of the core 11 is 2.2 or more and 3.6 or less. A value (r3 - r2) obtained by subtracting the radius r2 of the inner cladding 121 from the radius r3 of the trench 122 is 3 μm or more and 10 μm or less. In one embodiment, the value (r3 - r2) is 4.0. The value (r3 - r2) may be greater than 4.5 μm. The outer diameter of the outer cladding 123, that is, the outer diameter of the glass fiber 13, is within the range of 125 μm ± 0.5 μm as in the above-described embodiments. In one embodiment, the radius r1 of the core 11 is 4.0 μm, the radius r2 of the inner cladding 121 is 14.4 μm, and the radius r3 of the trench 122 is 18.4 μm.

The mode field diameter of the optical fiber 10A for light at a wavelength of 1310 nm is 9.2 μm ± 0.4 μm, that is, 8.8 μm or more and 9.6 μm or less. The mode field diameter is defined by Petermann-I. When the optical fiber 10A is wound around a mandrel having a radius 15 mm, the bending loss for light at a wavelength of 1625 nm is 1.0 dB or less per turn. When the optical fiber 10A is wound around a mandrel having a radius 30 mm, the bending loss for light at a wavelength of 1625 nm is 0.1 dB or less per 10 turns. When the optical fiber 10A is wound around a mandrel having a diameter of 100 mm, the bending loss for light at a wavelength of 1625 nm is $1.0 \times 10^{-4}$ dB or less per turn. When the value (r2/r1) obtained by dividing the radius r2 of the inner cladding 121 by the radius r1 of the core 11 is 3.6 or less, such bending loss characteristics can be realized. As described above, the optical fiber 10A satisfies the bending loss level specified in G.657.A2, while setting the center of the mode field diameter to 9.2 μm and enlarging the mode field diameter compared with an ordinary optical fiber, that is, an optical fiber having only one stage of refractive index distribution of each core and cladding. When wound with a diameter of 100 mm, the bending loss is too small to measure. Therefore, the bending loss at several bending diameters within the range of 20 mm to 60 mm is measured, and the bending loss is calculated by extrapolation based on the dependency of the bending loss on the bending diameter.

The zero-dispersion wavelength of the optical fiber 10A is 1300 nm or more and 1324 nm or less. That is, the zero-dispersion wavelength of the optical fiber 10A comply with the regulation of G.657.A2. When the value (r2/r1) obtained by dividing the radius r2 of the inner cladding 121 by the radius r1 of the core 11 is 2.2 or more, such a zero-dispersion wavelength can be realized. The wavelength dispersion of the optical fiber 10A for light at a wavelength of 1550 nm is 18.6 ps/(nm·km) or less. The zero-dispersion slope of the optical fiber 10A is 0.092 ps/(nm²·km) or less. When the wavelength dispersion and the zero-dispersion slope are within these ranges, a bending-resistant optical fiber complying with the regulation of G.657.A2 can be obtained.

The cable cut-off wavelength of the optical fiber 10A is 1260 nm or less. In other words, the cable cutoff wavelength of the optical fiber 10A comply with the regulations of G.657.A2.

The transmission loss of the optical fiber 10A for light at a wavelength of 1383 nm is 0.35 dB/km or less. In other words, the average OH mass concentration of the core 11 and the cladding 12 is so small that the transmission loss for light at a wavelength of 1383 nm is 0.35 dB/km or less. When the transmission loss is within this range, the wavelength range that can be used for information transmission in the optical communication system can be expanded.

When the standard deviation of the variation of the outer diameter of the glass fiber 13 in the axial direction is σ, 3σ is, for example, 0.1 μm or more and 0.5 μm or less. Here, the standard deviation σ represents a variation in a longitudinal direction of the measured values, that is, a dispersion of an outer diameter variation, when measured at regular intervals along the longitudinal direction, for example, at 1 m intervals. The value of 3σ may fall within a range of 0.2 μm or more and 0.5 μm or less. The outer diameter variation needs to be equal to or less than a predetermined value in order to satisfy the international standard for glass diameter.

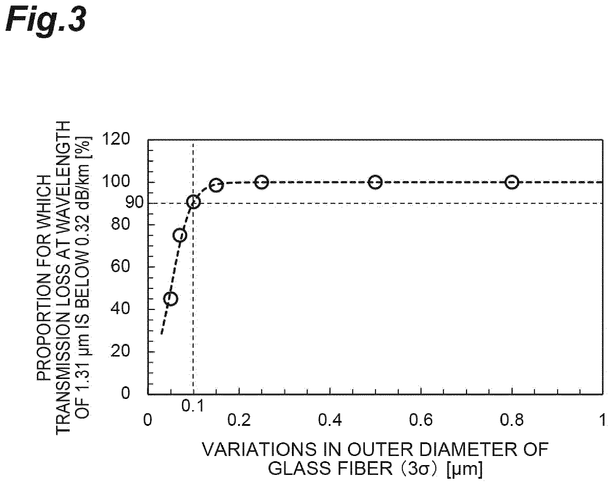

FIG. 3 is a graph showing the relationship between the dispersion ($3\sigma$) in the outer diameter variation of the glass fiber 13 and a proportion of optical fibers having a transmission loss of 0.32 dB/km or less at a wavelength of 1.31 $\mu$m. As is clear from FIG. 3, when the dispersion ($3\sigma$) of the outer diameter variation is 0.1 $\mu$m or more, the proportion of the optical fibers having a transmission loss of 0.32 dB/km or less exceeds 90%, and the transmission loss can be suppressed to a sufficiently low level. There is a correlation between the dispersion in the outer diameter variation and the transmission loss at the wavelength of 1.31 $\mu$m, and the transmission loss at the wavelength of 1.31 $\mu$m increases as the dispersion in the outer diameter variation decreases. The transmission loss at a wavelength of 1.31 $\mu$m can be suppressed within a range in which the outer diameter variation is not problematic by allowing some dispersion in the outer diameter variation, that is, setting $3\sigma$ to 0.1 $\mu$m or more and 0.5 $\mu$m or less.

Here, Table 1 shows specifications and characteristics of optical fibers according to sample numbers 1 to 4 as examples and comparative examples. All of the outer claddings 123 have a radius of 62.5 $\mu$m

[Table 1]

| | | Unit | Sample 1 | Sample 2 | Sample 3 | Sample 4 |
|---|---|---|---|---|---|---|
| Structural parameter | Core radius r1 | $\mu$m | 4.0 | 4.0 | 3.9 | 4.0 |
| | Inner cladding radius r2 | $\mu$m | 8.8 | 14.4 | 7.8 | 15.2 |
| | Trench radius r3 | $\mu$m | 14.8 | 18.4 | 12.8 | 20.2 |
| | Relative refractive index difference $\Delta 1$ | % | 0.35 | 0.34 | 0.35 | 0.32 |
| | Relative refractive index difference $\Delta 2$ | % | 0.02 | -0.03 | 0.00 | 0.00 |
| | Relative refractive index difference $\Delta 3$ | % | -0.30 | -0.40 | -0.50 | -0.30 |
| | r2/r 1 | - | 2.2 | 3.6 | 2.0 | 3.8 |
| | Trench thickness (r3 - r2) | $\mu$m | 6.0 | 4.0 | 5.0 | 5.0 |
| Optical property | MFD (wavelength 1.31$\mu$m) | $\mu$m | 9.1 | 9.2 | 8.8 | 9.6 |
| | Wavelength dispersion (wavelength 1.55mm) | ps/(nm·km) | 18.5 | 15.4 | 19.4 | 14.6 |
| | Zero-dispersion wavelength | nm | 1306 | 1317 | 1302 | 1324 |
| | Zero-dispersion slope | ps/(nm$^2$·km) | 0.090 | 0.087 | 0.091 | 0.086 |
| | Cable cut-off | nm | 1231 | 1242 | 1187 | 1256 |
| | Bending loss of 15mm diameter (wavelength 1.625mm) | dB/turn | 0.172 | 0.162 | 0.129 | 0.186 |
| | Bending loss of 30mm diameter (wavelength 1.625mm) | dB/ 10turns | 0.066 | 0.081 | 0.085 | 0.125 |
| | Transmission loss (wavelength 1.38mm) | dB/km | $\leq$ 0.35 | $\leq$ 0.33 | 0.40 to 0.5 0 | $\leq$ 0.32 |
| | Transmission loss (wavelength 1.55mm) | dB/km | $\leq$ 0.19 | $\leq$ 0.19 | $\leq$ 0.19 | $\leq$ 0.19 |

As shown in Table 1, in Samples 1 and 2, favorable values are achieved in each optical characteristic. On the other hand, in Sample 3, the transmission loss at the wavelength of 1.38 $\mu$m is excessive. In addition, the wavelength dispersion ($\lambda$=1550 nm) deviates from the G.657.A2 standard. In Sample 4, the bending loss at the diameter of 30 mm at the wavelength of 1.625 $\mu$m is excessive. Therefore, the value (r2/r1) obtained by dividing the radius r2 of the inner cladding 121 by the radius r1 of the core 11 may be 2.2 or more and 3.6 or less.

The thickness t2 of the secondary resin layer 15 is 5.0 $\mu$m or more and 17.5 $\mu$m or less. When the coating resin layer 16A is formed, since coating eccentricity with a magnitude of several micrometers ($\mu$m) occurs due to vibration of the glass fiber 13, the secondary resin layer 15 may be locally thinned. Here, the coating eccentricity is a distance between the center of the glass fiber 13 and the center of the outer periphery of the coating resin layer 16A. When a foreign material adhered to the roller in a wire drawing step falls on a site that has been locally thinned as such, the foreign material causes wire breaking of the optical fiber 10A, and the yield of the optical fiber 10A is decreased. As the average thickness of the secondary resin layer 15 is 5.0 $\mu$m or more, extreme thinning of the secondary resin layer 15 caused by coating eccentricity is prevented, and wire breaking of the optical fiber 10A can be reduced. The outer diameter D4 of the secondary resin layer 15 is 170 $\mu$m ± 5 $\mu$m, that is, 165 $\mu$m or more and 175 $\mu$m or less. When the outer diameter D4 of the secondary resin layer 15 has such a value, an optical fiber element wire having a small outer diameter compared with the outer diameter of conventional optical fiber element wires can be realized. Therefore, a larger number of bare optical fibers can be packaged in an optical cable.

The Young's modulus of the secondary resin layer 15 may be 1200 MPa or greater and 2800 MPa or less at 23°C, may be 1500 MPa or greater and 2800 MPa or less, and may be 2000 MPa or greater and 2700 MPa or less. When the Young's modulus of the secondary resin layer 15 is 1200 MPa or greater, the lateral pressure resistance characteristics are likely to be enhanced, and when the Young's modulus is 2800 MPa or less, since appropriate toughness can be imparted to the secondary resin layer 15, tension resistance and low-temperature characteristics are likely to be enhanced. When the Young's modulus of the secondary resin layer 15 is 2800 MPa or less, deterioration of the external appearance caused by external scratches and cracking of the secondary resin layer 15 are less likely to occur.

A secondary resin layer 15 having the above-described characteristics can be formed by curing a base resin containing an oligomer including urethane (meth)acrylate, a monomer, and a photopolymerization initiator, or a resin composition including this base resin and hydrophobic inorganic oxide particles. The term (meth)acrylate means an acrylate or a methacrylate corresponding thereto. The same also applies to (meth)acrylic acid and the like. The inorganic oxide particles are spherical particles. The inorganic oxide particles are at least one kind selected from the group consisting of silicon dioxide (silica), zirconium dioxide (zirconia), aluminum oxide (alumina), magnesium oxide (magnesia), titanium oxide (titania), tin oxide, and zinc oxide. From the viewpoint of imparting appropriate toughness to the secondary resin layer 15, the average primary particle size of the inorganic oxide particles may be 500 nm or less. From the viewpoint of increasing the Young's modulus of the secondary resin layer 15, the average primary particle size of the inorganic oxide particles may be 5 nm or more, or may be 10 nm or more.

The surface of the inorganic oxide particles is subjected to a hydrophobic treatment. The term hydrophobic treatment implies that a hydrophobic group has been introduced into the surface of the inorganic oxide particles. The hydrophobic group may be a reactive group (ultraviolet-curable functional group) such as a (meth)acryloyl group, or a non-reactive group such as an aliphatic hydrocarbon group (for example, an alkyl group) or an aromatic hydrocarbon group (for example, a phenyl group). When the inorganic oxide particles have a reactive group, it is easy to form a resin layer having a high Young's modulus. An ultraviolet-curable functional group may be introduced into the surface of the inorganic oxide particles. An ultraviolet-curable functional group can be introduced into the surface of the inorganic oxide particles by treating the inorganic oxide particles by means of a silane compound having an ultraviolet-curable functional group. Examples of the silane compound having an ultraviolet-curable functional group include a 3-methacryloxypropyltrimethoxysilane.

As the urethane (meth)acrylate, an oligomer obtained by reacting a polyol compound, a polyisocyanate compound, and a hydroxyl group-containing (meth)acrylate compound can be used. Examples of the polyol compound include polytetramethylene glycol. Examples of the polyisocyanate compound include 2,4-tolylene diisocyanate. Examples of the hydroxyl group-containing (meth)acrylate compound include 2-hydroxyethyl (meth)acrylate.

The base resin may further include epoxy (meth)acrylate as the oligomer. Regarding the epoxy (meth)acrylate, an oligomer obtained by reacting an epoxy resin having two or more glycidyl groups with a compound having a (meth)acryloyl group.

As the monomer, at least one selected from the group consisting of a monofunctional monomer having one polymerizable group, and a polyfunctional monomer having two or more polymerizable groups can be used. Regarding the monomer, two or more kinds thereof may be used as a mixture. Examples of the monofunctional monomer include methyl (meth)acrylate. Examples of the polyfunctional monomer include ethylene glycol di(meth)acrylate. From the viewpoint of increasing the Young's modulus of the resin layer, the monomer may include a polyfunctional monomer, or the monomer may include a monomer having two polymerizable groups.

Regarding the photopolymerization initiator, any one can be appropriately selected from radical photopolymerization initiators and used.

The thickness t1 of the primary resin layer 14 is 7.5 $\mu$m or more and 17.5 $\mu$m or less. In other words, the outer diameter D3 of the primary resin layer 14 is 140 $\mu$m or more and 160 $\mu$m or less. As the range of the Young's modulus of the primary resin layer 14 that will be described below is satisfied, and at the same time, the primary diameter is 140 $\mu$m or more, that is, the thickness t1 of the primary resin layer 14 is 7.5 $\mu$m or more, sufficient lateral pressure resistance characteristics are secured, and an increase in the loss against the lateral pressure can be suppressed. As the outer diameter D3 of the primary resin layer 14 is 160 $\mu$m or less, that is, the thickness t1 of the primary resin layer 14 is 17.5 $\mu$m or less, a sufficient thickness t2 (5.0 $\mu$m or more) of the secondary resin layer 15 can be secured within the range of the outer diameter (165 μm or more and 175 μm or less) of the optical fiber 10A that has been determined in advance.

According to an aspect of the present embodiment, the Young's modulus of the primary resin layer 14 may be 0.10 MPa or greater and 0.30 MPa or less at 23°C. When the Young's modulus of the primary resin layer 14 is 0.10 MPa or greater, coating cracks called voids and peeling (delamination) of the coating are less likely to occur in the primary resin layer 14 at a screening tension of 1.5 kg or greater. This optical fiber 10A does not have a problem with low-temperature characteristics. When the Young's modulus of the primary resin layer 14 is 0.30 MPa or less, especially excellent lateral pressure resistance characteristics are obtained within the above-mentioned range of the thickness t1 of the primary resin layer 14. In the following description, an optical fiber 10A including a primary resin layer 14 having a Young's modulus of 0.10 MPa or greater and 0.30 MPa or less may be referred to as lateral pressure resistance-specialized type optical fiber.

According to another aspect of the present embodiment, the Young's modulus of the primary resin layer 14 may be 0.30 MPa or greater and 0.50 MPa or less at 23°C. When the Young's modulus of the primary resin layer 14 is 0.30 MPa or greater, coating cracks called voids and peeling (delamination) of the coating are less likely to occur in the primary resin layer 14 at a screening tension of 2.0 kg or greater, wire breaking is further less likely to occur during tape formation and cable formation, and productivity is enhanced. When the Young's modulus of the primary resin layer 14 is 0.50 MPa or less, lateral pressure resistance characteristics are obtained within the above-mentioned range of the thickness t1 of the primary resin layer 14. In the following description, an optical fiber 10A including a primary resin layer 14 having a Young's modulus of 0.30 MPa or greater and 0.50 MPa or less may be referred to as high screening tension type optical fiber.

A primary resin layer 14 having the above-described characteristics can be formed by, for example, curing a resin composition including an oligomer including urethane (meth)acrylate, a monomer, a photopolymerization initiator, and a silane coupling agent. The urethane (meth)acrylate, monomer, and photopolymerization initiator may be appropriately selected from the compounds listed as examples for the base resin. However, the resin composition that forms the primary resin layer 14 has a composition different from that of the base resin that forms the secondary resin layer 15.

Hereinafter, the results of an evaluation test according to the first embodiment will be described. The present invention is not intended to be limited to these Examples.

A plurality of samples of the optical fiber 10A were produced by forming the primary resin layer 14 on the outer periphery of the glass fiber 13 having a diameter of 125 μm and having the core 11 and the cladding 12, and further forming the secondary resin layer 15 on the periphery of the primary resin layer 14. Table 2 below is a table showing the outer diameter, thickness, and Young's modulus at 23 °C of the primary resin layer 14, the outer diameter, thickness, and Young's modulus at 23 °C of the secondary resin layer 15, the lateral pressure resistance characteristics, and the screening tension of each sample produced. The structures of the glass fibers 13 of sample numbers 5 and 6 were the same as that of sample number 1 in Table 1, and the structure of the glass fiber 13 of sample number 7 was the same as that of sample number 2 in Table 1.

[Table 2]

| Sample No. | | 5 | 6 | 7 |
|---|---|---|---|---|
| Outer diameter [μm] | Primary | 160 | 140 | 160 |
| | Secondary | 170 | 170 | 170 |
| Thickness [μm] | Primary | 17.5 | 7.5 | 17.5 |
| | Secondary | 5 | 15 | 5 |
| Young's modulus [MPa] | Primary | 0.50 | 0.40 | 0.30 |
| | Secondary | 2800 | 2800 | 1200 |
| Lateral pressure resistance characteristics | | A | A | A |
| Screening tension | | A | A | A |

Separately from the above, a plurality of samples of the optical fiber were produced by forming the primary resin layer 14 on the outer periphery of a glass fiber having a diameter of 125 μm and having a cladding composed of a single composition in place of the cladding 12 of the present embodiment, and further forming the secondary resin layer 15 on the periphery of the primary resin layer 14. Quartz glass doped with fluorine was used for the cladding. The following Table 3 and Table 4 are tables showing the outer diameter, thickness, and Young's modulus at 23°C of the primary resin layer 14, the outer diameter, thickness, and Young's modulus at 23°C of the secondary resin layer 15, the lateral pressure resistance characteristics, screening tension, and other characteristics.

[Table 3]

| | | Lateral pressure resistance-specialized type | | | | | High Screening Tension Type | | | |
|---|---|---|---|---|---|---|---|---|---|---|
| Sample No. | | 8 | 9 | 10 | 11 | 12 | 13 | 14 | 15 | 16 |
| Outer diameter [μm] | Primary | 150 | 160 | 140 | 140 | 160 | 150 | 160 | 140 | 160 |
| | Secondary | 170 | 170 | 170 | 175 | 170 | 170 | 170 | 170 | 170 |
| Thickness [μm] | Primary | 12.5 | 17.5 | 7.5 | 7.5 | 17.5 | 12.5 | 17.5 | 7.5 | 17.5 |
| | Secondary | 10 | 5 | 15 | 17.5 | 5 | 10 | 5 | 15 | 5 |
| Young's modulus [MPa] | Primary | 0.20 | 0.10 | 0.10 | 0.10 | 0.30 | 0.40 | 0.50 | 0.40 | 0.30 |
| | Secondary | 1200 | 1200 | 2800 | 2800 | 2800 | 1200 | 2800 | 2800 | 1200 |
| Lateral pressure resistance characteristics | | A | A | A | A | A | B | B | B | B |
| Screening tension | | B | B | B | B | B | A | A | A | A |
| Other characteristics | | - | - | - | - | - | - | - | - | - |

[Table 4]

| | | Reference Example | | | | |
|---|---|---|---|---|---|---|
| Sample No. | | 17 | 18 | 19 | 20 | 21 |
| Outer diameter [μm] | Primary | 150 | 165 | 135 | 150 | 150 |
| | Secondary | 170 | 170 | 170 | 170 | 170 |
| Thickness [μm] | Primary | 12.5 | 20 | 5.0 | 12.5 | 12.5 |
| | Secondary | 10 | 2.5 | 17.5 | 10 | 10 |
| Young's modulus [MPa] | Primary | 0.65 | 0.10 | 0.20 | 0.10 | 0.07 |
| | Secondary | 1200 | 2800 | 1200 | 2900 | 1100 |
| Lateral pressure resistance characteristics | | C | A | C | A | A |
| Screening Tension | | A | C | A | C | C |
| Other Characteristics | | | Multiple occurrences of wire breaking | | Secondary cracking and defective external appearance | Defective low-temperature characteristics |

In the present Example, a primary resin layer 14 having a Young's modulus of 0.10 MPa and a primary resin layer 14 having a Young's modulus of 0.20 MPa were obtained by means of a resin composition 1 shown in Table 5. Hereinafter, these primary resin layers 14 are referred to as resin P1. A primary resin layer 14 having a Young's modulus of 0.30 MPa and a primary resin layer 14 having a Young's modulus of 0.40 MPa were obtained by means of a resin composition 2 shown in Table 5. Hereinafter, these primary resin layers 14 are referred to as resin P2. A primary resin layer 14 having a Young's modulus of 0.50 MPa was obtained by means of a resin composition 3 shown in Table 5. Hereinafter, these primary resin layers 14 are referred to as resin P3. A primary resin layer 14 having a Young's modulus of 0.07 MPa was obtained by means of a resin composition 4 shown in Table 5. A primary resin layer 14 having a Young's modulus of 0.65 MPa was obtained by means of a resin composition 5 shown in Table 3. Urethane oligomer (I) is specifically HEA-TDI-(PPG3000-TDI)$_{2,1}$-HEA. Urethane oligomer (II) is specifically HEA-TDI-(PPG3000-TDI)$_{2,1}$-EH. Urethane oligomer (III) is specifically HEA-TDI-(PPG3000-TDI)$_{2,1}$-SiI.

[Table 5]

| Resin composition No. | | | 1 | 2 | 3 | 4 | 5 |
|---|---|---|---|---|---|---|---|
| Composition (% by mass) | Urethane oligomer | (I) | 2.0 | 3.0 | 5.0 | 1.0 | 7.0 |
| | | (II) | 75 | 70 | 68 | 78 | 66 |
| | | (III) | 7.0 | 7.0 | 7.0 | 7.0 | 7.0 |
| | Radical polymerizable non-urethane monomer | 2-Ethylhexyl acrylate | 10 | 10 | 10 | 10 | 10 |
| | | N-vinylcaprolactam | 8.5 | 8.5 | 8.5 | 8.5 | 8.5 |
| | | Trimethylpropane triacrylate | 0.50 | 0.50 | 0.50 | 0.50 | 0.50 |
| | | Trimethoxysilylpropy l methacrylate | 0.15 | 0.15 | 0.15 | 0.15 | 0.15 |
| | Non-radical polymerizable alkoxysilane | Tetraethoxysilane | 0.50 | 0.50 | 0.50 | 0.50 | 0.50 |
| | Photopolymerization initiator | 2,4,6-Trimethylbenzoyldiph enylphosphine oxide | 1.2 | 1.2 | 1.2 | 1.2 | 1.2 |
| | Additive | Hindered phenol-based oxidation inhibitor | 0.60 | 0.60 | 0.60 | 0.60 | 0.60 |

The secondary resin layer 15 of each sample having a Young's modulus of 1100 MPa or 1200 MPa is referred to as resin S1. In the present Example, among the resin S1, differences of the Young's moduli were obtained by UV power adjustment or selection based on the fluctuation of each sample, on the basis of the following Table 6. UA1 was produced by reacting 2,4-tolylene diisocyanate with polypropylene glycol having number average molecular weight of 2000 at a weight ratio of 1:5.7. UA2 was produced by reacting 2,4-tolylene diisocyanate with polypropylene glycol having number average molecular weight of 10000 at a weight ratio of 1:28.

[Table 6]

| Component | Parts by mass (%) |
|---|---|
| UA1 | 20.0 |
| UA2 | 1.0 |
| Bisphenol A epoxy diacrylate | 48.0 |
| Tripropylene glycol diacrylate | 32.0 |
| 1-Hydroxycyclohexyl phenyl ketone | 2.0 |
| 2,4,6-Trimethylbenzoyldiphenylphosphine oxide | 0.4 |

The secondary resin layer 15 of each sample having a Young's modulus of 2800 MPa or 2900 MPa is referred to as resin S2. In the present Example, among the resin S2, the composition shown in the following Table 7 was adopted, and differences of the Young's moduli were obtained by UV power adjustment or selection based on the fluctuation of each sample. UA is a urethane acrylate obtained by reacting a polypropylene glycol having a molecular weight of 600, 2,4-tolylene diisocyanate, and hydroxyethyl acrylate. EA is epoxy diacrylate.

[Table 7]

| Oligomer (% by mass) | UA | 50 |
|---|---|---|
| | EA | 10 |
| Monomer (% by mass) | Isobornyl acrylate | 10 |
| | Tripropylene glycol diacrylate | 13 |
| | 2-Phenoxyethyl acrylate | 17 |
| Silica particles (% by mass) | | 65 |

In the present Example, the Young's modulus of the primary resin layer 14 was measured by a Pullout Modulus (POM) method at 23°C. A metal cylinder is adhered at each of two sites separated at a predetermined interval of an optical fiber 10A. A portion of the coating resin layer, that is, the primary resin layer 14 and the secondary resin layer 15, between the cylinders is removed to expose glass. The optical fiber on the outer side of a metal cylinder, that is, side away from the other metal cylinder, is cut away. In this case, the length of the optical fiber is the sum of the length of the portion adhered to both the metal cylinders and the length of the portion between the metal cylinders. Next, one of the metal cylinders was fixed, and the other metal cylinder was gently and slightly moved in the direction opposite to the above-mentioned fixed metal cylinder. The length of the metal cylinder, that is, the length over which the optical fiber 10A was adhered, was designated as L, the travel amount of the chucks was designated as Z, the outer diameter of the primary resin layer 14 was designated as Dp, the outer diameter of the glass fiber 13A was designated as Df, the Poisson ratio of the primary resin layer 14 was designated as n, and the load at the time of moving the chuck device was designated as W. The Youngs modulus of the primary resin layer 14 was determined from the following formula:

$$\text{Young's modulus (MPa)} = ((1 + n)W/\pi LZ) \times \ln(Dp/Df)$$

In this case, it is considered that the metal cylinders moved due to the deformation of the primary resin layer 14, while the glass fiber 13, the secondary resin layer 15, and the adhesion parts were not deformed (not elongated).

Regarding the Young's modulus of the secondary resin layer 15, a tensile test by gauge length of 25 mm was performed in an environment at $23 \pm 2°C$ and $50 \pm 10\%RH$ using a pipe-shaped coating resin layer having a length of 50 mm or more obtained by pulling out the glass fiber 13 from the optical fiber 10A, and the Young's modulus was determined from the 2.5% secant value.

The lateral pressure resistance characteristics were evaluated by the following method. The optical fiber 10A having a length of 500 m was wound in only one layer with a tension of 80 g around a bobbin having a cylindrical diameter of 405 mm, on which a flatly wound plain-woven metal mesh having a wire outer diameter of 50 $\mu$m and a pitch of 150 $\mu$m was wound, and the transmission loss of the optical fiber 10A is measured in that state. That optical fiber 10A was wound around a bobbin having a cylindrical diameter of 280 mm and then is taken out from the bobbin, and the optical fiber 10A was arranged in a state of being wound in a ring shape having a diameter of about 280 mm. In that state, the transmission loss of the optical fiber was measured. The measurement was made three times for each case, and an average value of those was determined. The difference between the average values was designated as the transmission loss difference. Here, the transmission loss is the transmission loss of light having a wavelength of 1550 nm and was calculated from a loss spectrum measured by a cutback method. A case in which the transmission loss difference was 1.0 dB/km or less was rated as lateral pressure resistance characteristic "A". A case in which the transmission loss difference was more than 1.0 dB/km and 1.5 dB/km or less was rated as lateral pressure resistance characteristic "B". A case in which the transmission loss difference was more than 1.5 dB/km was rated as lateral pressure resistance characteristic "C".

The screening tension was evaluated by the following method. An optical fiber having a length of 1000 km was rewound with a tension applied thereon. A case in which the number of times of wire breaking at the time of rewinding the optical fiber having a length of 1000 km with a tension of 2.0 kg, more specifically, 1.9 kg or more and 2.3 kg or less, was 5 or fewer times was evaluated as screening tension "A". A case in which in a tensile test with a tension of 2.0 kg, more than 5 times of wire breaking occurred at the time of rewinding the optical fiber having a length of 1000 km, whereas in a tensile test with a tension of 1.5 kg, more specifically, 1.4 kg or more and 1.6 kg or less, the number of times of wire breaking at the time of rewinding the optical fiber having a length of 1000 km was 5 or fewer times, was rated as screening tension "B". A case in which in a tensile test with a tension of 1.5 kg, the number of times of wire breaking at the time of rewinding the optical fiber having a length of 1000 km was more than 5 times, was rated as screening tension "C". There is a correlation between the tension resistance and the low-temperature characteristics of an optical fiber. That is, for an optical fiber that can withstand a screening tension of 2.0 kg, the transmission loss difference between 23°C and - 60°C is 0.1 dB/km or less. For an optical fiber that can withstand a screening tension of 1.5 kg, the transmission loss difference between 23°C and -60°C is 1.2 dB/km or less. The transmission loss difference between 23°C and -60°C can be determined by the following method. That is, loosely winding an optical fiber having a length of 1 km into a ring having a diameter of 280 mm, measuring the transmission loss of signal light having a wavelength of 1550 nm by an OTDR method under each temperature condition, and then subtracting the transmission loss at 23°C from the transmission loss at -60°C.

According to the Examples shown in Tables 2 and 3, when the thickness of the primary resin layer 14 was 7.5 $\mu$m or more and 17.5 $\mu$m or less, the thickness of the secondary resin layer 15 was 5.0 $\mu$m or more and 17.5 $\mu$m or less, the Young's modulus of the primary resin layer was 0.10 MPa or greater and 0.50 MPa or less, and the Young's modulus at 23°C of the secondary resin layer was 1200 MPa or greater and 2800 MPa or less, the rating for the lateral pressure resistance characteristics was A or B, while the rating for the screening tension was A or B. In this case, it is possible to provide an optical fiber with reduced diameter having excellent tensile strength resistance (low-temperature characteristics) while suppressing deterioration of lateral pressure resistance characteristics. In particular, in Table 2, that is, in a case where the optical fiber includes the glass fiber 13 of the present embodiment, the ratings of the lateral pressure resistance characteristics and the screening tension are both A, and it is possible to provide an optical fiber with reduced diameter having excellent tension resistance (low-temperature characteristics) while significantly suppressing deterioration of the lateral pressure resistance characteristics. As shown in Table 3, when the Young's modulus of the primary resin layer is 0.10 MPa or greater and 0.30 MPa or less, a lateral pressure resistance-specialized type optical fiber whose rating for the lateral pressure resistance characteristics is A, can be provided. When the Young's modulus of the primary resin layer is 0.30 MPa or greater and 0.50 MPa or less, a high screening tension type optical fiber, that is, low-temperature characteristics-specialized type optical fiber, whose rating for the screening tension is A, can be provided. As the screening tension is higher, the optical fiber is less likely to break in a tape-forming step, which is a subsequent step, and the product yield for a multicore cable is enhanced.

As shown in Table 4, when the thickness of the secondary resin layer 15 is set to be less than 5.0 μm, wire breaking of the optical fiber occurs multiple times, and it was inappropriate for the production of a product. When the Young's modulus of the secondary resin layer 15 was greater than 2800 MPa, the coating became brittle, cracking occurred in the secondary resin layer 15, and the optical fiber had defective external appearance.

(Second Embodiment)

In a step of producing an optical fiber 10A having a small outer diameter D4 as in the first embodiment described above, the frequency of the optical fiber undergoing wire breaking is likely to be higher as compared with an optical fiber having a conventional outer diameter, for example, 250 μm. When wire breaking of the optical fiber 10A occurs in the production process, there is a risk that the production efficiency for the optical fiber 10A may be decreased. For such a problem, the inventors found that the frequency of wire breaking of the optical fiber 10A in the production process is dependent on the eccentric amount of the glass fiber 13 in the optical fiber 10A.

When passing through a die inside a resin coating device, the glass fiber 13 vibrates in the diameter direction of the glass fiber 13, the glass fiber 13 is eccentric with respect to the opening of the die, and the coating resin layer 16A is formed in that state. For this reason, the coating resin layer 16A is thinned in a direction in which the central axis of the glass fiber 13 is deviated from the central axis of the optical fiber 10A. In this case, when the optical fiber 10A comes into contact with burrs of a guide roller or foreign materials on a guide roller, there is a risk that large stress may be locally applied to the glass fiber 13 through the portion where the coating resin layer 16A is thinner. For this reason, damage such as cracks may occur in the glass fiber 13. As a result, there is a risk that the optical fiber 10A may break such that wire breaking begins from a site of damage in the glass fiber 13 as a starting point. In optical fibers having smaller outer diameters, wire breaking may occur even when eccentricity occurs to the extent that does not induce wire breaking in conventional optical fibers.

Thus, the inventors of the present invention conducted, as an investigation on the eccentric amount of the above-mentioned glass fiber 13, Fourier transformation of the waveform representing the eccentric amount of the glass fiber 13 with respect to the position in the axial direction of the glass fiber 13, and analyzed a spectrum obtained by the Fourier transformation.

As a result, the present inventors succeeded in suppressing wire breaking of the optical fiber 10A by adjusting the production conditions and the production apparatus so as to suppress the maximum amplitude to a predetermined value or less in the spectrum obtained by Fourier transforming the eccentric amount waveform of the glass fiber 13. The present embodiment is based on the above-described findings discovered by the present inventors.

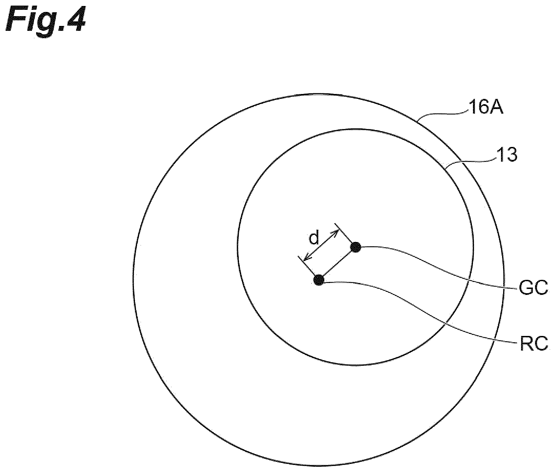

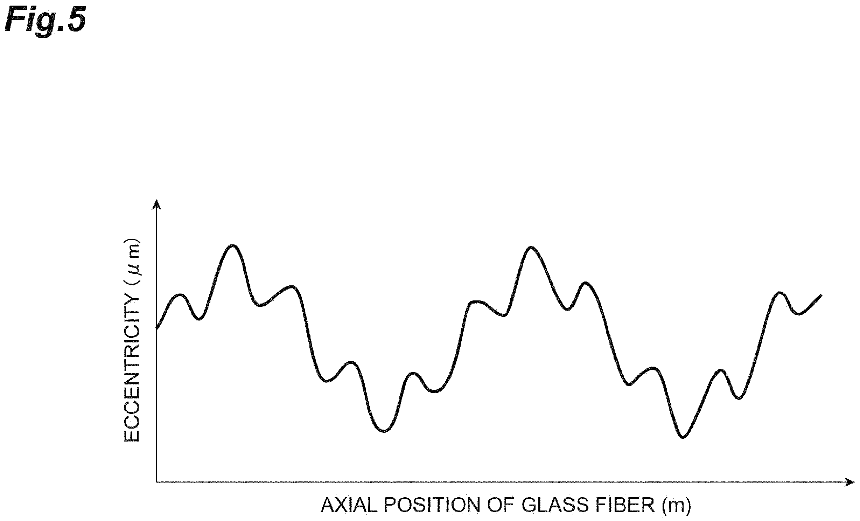

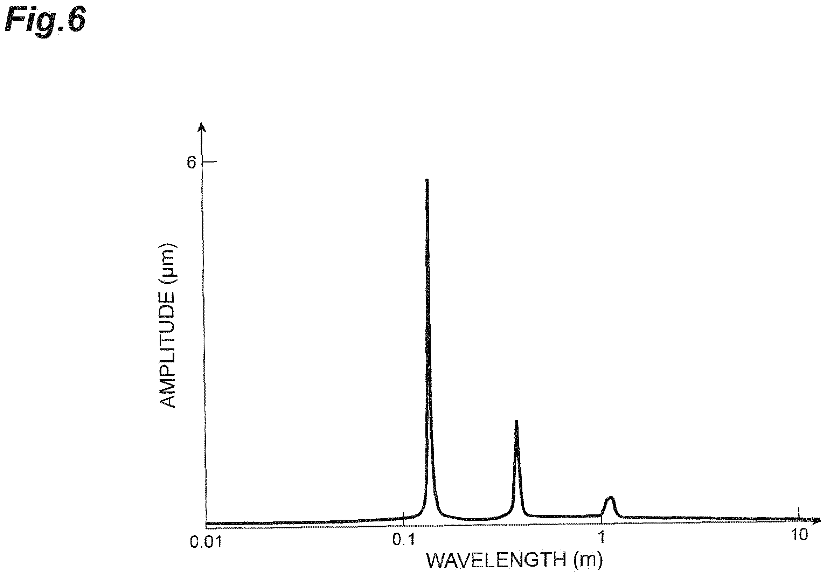

The eccentric amount of the glass fiber 13 according to the present embodiment will be described with reference to FIG. 4, FIG. 5, and FIG. 6. FIG. 4 is a schematic view for explaining the definition of the eccentric amount of the glass fiber 13. FIG. 5 is a diagram of the eccentric amount waveform showing the eccentric amount of the glass fiber 13 with respect to the position in the axial direction of the glass fiber 13. FIG. 6 is a diagram showing an example of the spectrum obtained by Fourier transforming the eccentric amount waveform.

First, the definition of the eccentric amount of the glass fiber 13 will be described with reference to FIG. 4. FIG. 4 is an explanatory diagram for illustrative purpose only and is not intended to show the state of the optical fiber 10A of the present embodiment. However, in order to simplify the description, the same reference numerals as those in FIG. 1 are used.

As shown in FIG. 4, the eccentric amount d of the glass fiber 13 is defined as the distance from the central axis RC based on the outer periphery of the coating resin layer 16A to the central axis GC of the glass fiber 13, that is, amount of deviation in the diameter direction or the amount of displacement in the diameter direction. Here, the eccentric amount of the glass fiber 13 is measured by means of, for example, an eccentric amount variation observation apparatus.

The eccentric amount variation observation apparatus is configured as an image recognition apparatus for eccentricity. The eccentric amount variation observation apparatus includes, for example, a first light source, a first image pickup unit, a second light source, and a second image pickup unit. The first light source is disposed so as to irradiate light in the radial direction of the optical fiber 10A of the object of measurement. The light of the first light source includes a wavelength that penetrates through the coating resin layer 16A. The first image pickup unit is disposed to face the first light source, with the optical fiber 10A as the object of measurement interposed therebetween, and is configured so as to acquire an image of light that has penetrated through the optical fiber 10A. The second light source and the second image pickup unit are configured similarly to the first light source and the first image pickup unit, except that the second light source and the second image pickup unit are disposed to orthogonally intersect the direction opposite to the first light source and the first image pickup unit.

Based on such a configuration, in the directions of two axes that are perpendicular to the central axis of the optical fiber 10A and orthogonally intersect each other, the position of the outer periphery of the coating resin layer 16A and the position of the inner periphery of the coating resin layer 16A, that is, the position of the outer periphery of the glass fiber 13, can be determined based on the light that has penetrated through the optical fiber 10A, and the eccentric amount of the glass fiber 13, which is the distance between those centers, can be measured. That is, the eccentric amount of the glass fiber 13 can be measured while the optical fiber 10A is made non-destructive.

The eccentric amount of the glass fiber 13 is measured at a plurality of measurement points set at predetermined intervals in the axial direction of the glass fiber 13. Then, the waveform (distribution) of the eccentric amount can be obtained by plotting the measurement results, with the positions of the plurality of measurement points represented on the axis of abscissa and the eccentric amount at each of the positions represented on the axis of ordinate. In the following description, the waveform of the eccentric amount of the glass fiber 13 is also referred to as "eccentric amount waveform".

Through the above-mentioned measurement, for example, the eccentric amount waveform shown in FIG. 5 is obtained. The "eccentric amount" on the axis of ordinate of FIG. 5 is the absolute value of the eccentric amount that does not depend on direction. As shown in FIG. 5, the eccentric amount waveform for an actual optical fiber 10A has a complicated shape. Thus, as shown in FIG. 6, the present inventors subjected the eccentric amount waveform of the optical fiber 10A to Fourier transformation and analyzed a spectrum obtained by the Fourier transformation.

As a result, the present inventors succeeded in decreasing the frequency of wire breaking by suppressing the "maximum value of the amplitude of the eccentric amount" in the spectrum obtained by Fourier transforming the eccentric amount waveform. The component that makes the amplitude of the eccentric amount maximal is also referred to as "maximum amplitude component".

Based on the above-mentioned findings, the optical fiber 10A of the present embodiment satisfies at least any one of the following requirements in relation to the eccentric amount of the glass fiber 13.

As shown in FIG. 6, according to the present embodiment, in the spectrum obtained by Fourier transforming the eccentric amount waveform of the glass fiber 13, the maximum value of the amplitude of the eccentric amount (amplitude value of the maximum amplitude component) is 6 μm or less. When the maximum value of the amplitude of the eccentric amount is more than 6 μm, the glass fiber 13 is significantly eccentric locally at a position where the peaks of the eccentric amount for each of the frequency components of the eccentric amount having different periods overlap each other. For this reason, the coating resin layer 16A is likely to be locally thinned. As a result, there is a risk that the frequency of wire breaking of the glass fiber 13 may increase. In contrast, in the present embodiment, the maximum value of the amplitude of the eccentric amount is set to 6 μm or less. In this case, even when the peaks of the eccentric amount for each of the frequency components of the eccentric amount having different periods overlap each other, locally large eccentricity of the glass fiber 13 can be suppressed. As a result, the coating resin layer 16A can be suppressed from locally thinning. Consequently, the frequency of wire breaking of the glass fiber 13 can be reduced. The maximum value of the amplitude of the eccentric amount is not particularly limited, and is preferably as close to 0 μm as far as possible.

As shown in FIG. 6, in the present embodiment, the wavelength at which the amplitude of the eccentric amount is the maximum (wavelength of the maximum amplitude component) in a spectrum obtained by Fourier transforming the eccentric amount waveform of the glass fiber 13 is 0.1 m or more. When the wavelength at which the amplitude of the eccentric amount is the maximum is less than 0.1 m, overlapping of a component that causes the amplitude of the eccentric amount to be the maximum and another component having a different wavelength frequently occurs. For this reason, the coating resin layer 16A is often locally thin. That is, the number of sites at which the thickness of the coating resin layer 16A per unit length in the axial direction of the glass fiber 13 is thin is increased. As a result, there is concern that the frequency of wire breaking of the glass fiber 13 may increase. In contrast, in the present embodiment, the "other component having a different wavelength" that overlaps the component component having the maximum amplitude of the eccentric amount can be reduced by setting the wavelength at which the amplitude of the eccentric amount is the maximum, to 0.1 m or more. As a result, the coating resin layer 16A can be suppressed from becoming locally thin. That is, an increase in the number of sites having a small thickness of the coating resin layer 16A per unit length in the axial direction of the glass fiber 13 can be suppressed. As a result, the frequency of wire breaking of the glass fiber 13 can be reduced.

The upper limit value of the wavelength at which the amplitude of the eccentric amount is the maximum is not particularly limited, and is preferably as large as possible. However, when the linear velocity and the like of the optical fiber production apparatus 50 that will be described below are taken into consideration, the wavelength at which the amplitude of the eccentric amount is the maximum is, for example, 1 m or less.

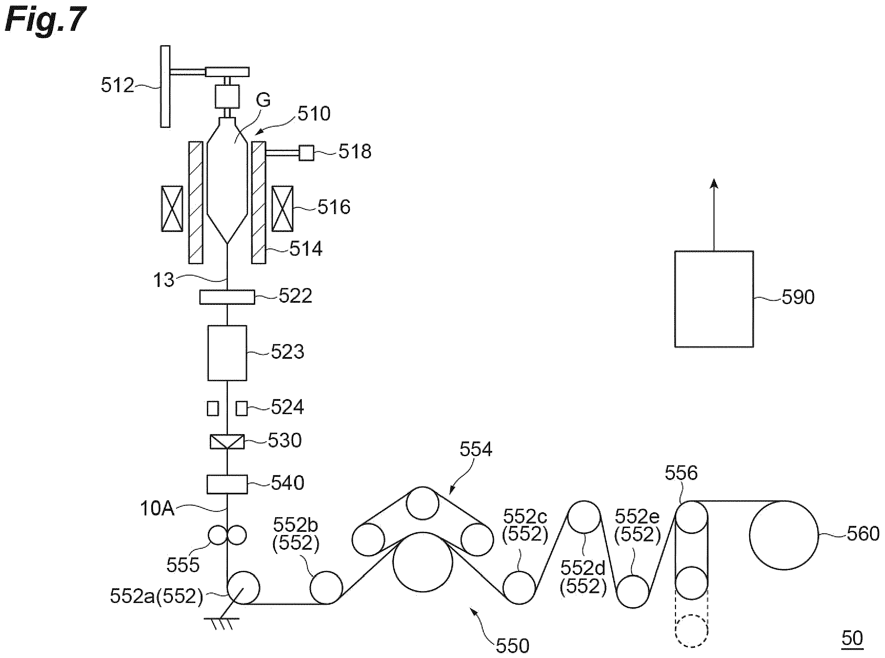

FIG. 7 is a schematic configuration diagram illustrating an optical fiber production apparatus 50 according to the present embodiment. The optical fiber production apparatus 50 according to the present embodiment will be described with reference to FIG. 7. The optical fiber production apparatus 50 includes, for example, a wire drawing furnace 510; a fiber position measuring unit 522; a cooling device 523; an outer diameter measuring unit 524; a resin coating device 530; a curing device 540; a conveyance unit 550; a bobbin 560; and a control unit 590. The apparatus members other than the control unit 590 are provided in this order. The wire drawing furnace 510 has a gripping mechanism 512; a furnace core tube 514; a heat generator 516; and a gas supply unit 518. Hereinafter, for each apparatus members of the optical fiber production apparatus 50, the side closer to the gripping mechanism 512 will be referred to as "upstream", and the side closer to the bobbin 560 will be referred to as "downstream".

The wire drawing furnace 510 is configured to form the glass fiber 13. A glass parent material G is heated in the wire drawing furnace 510, and the softened glass is extended to form a glass fiber 13 having a small diameter. The fiber position measuring unit 522 is configured to measure the position in the horizontal direction of the glass fiber 13. The cooling device 523 is configured to cool the glass fiber 13 formed in the wire drawing furnace 510. The outer diameter measuring unit 524 is configured to measure the outer peripheral diameter of the glass fiber 13 before resin coating.

The resin coating device 530 is configured to form the coating resin layer 16A so as to surround the outer periphery of the glass fiber 13. The resin coating device 530 has a die that applies an ultraviolet-curable resin composition on the outer periphery of the glass fiber 13 while inserting the glass fiber 13 therethrough. In the present embodiment, the resin coating device 530 has two dies that form a primary resin layer 14 and a secondary resin layer 15 from the central axis side of the glass fiber 13 toward the outer periphery side in this order. The curing device 540 is configured to irradiate ultraviolet radiation to the coating resin layer 16A and cure the coating resin layer 16A.

The conveyance unit 550 is configured to convey the optical fiber 10A obtained by curing the coating resin layer 16A. Specifically, the conveyance unit 550 has, for example, a plurality of guide rollers 552 and 556; and a capstan 554. A direct-under roller 552a, which is one of the multiple guide rollers 552, is located, for example, immediately below the curing device 540. The capstan 554 is provided on the downstream side of the direct-under roller 552a and is configured, for example, to convey (tow) the optical fiber 10A with a predetermined tension while gripping the optical fiber 10A between a belt and the rollers. A guide roller 552b among the plurality of guide rollers 552 is provided between the direct-under roller 552a and the capstan 554. Screening rollers 552c, 552d, and 552e among the plurality of guide rollers 552 are provided on the downstream side of the capstan 554 and are configured to apply screening tension to the optical fiber 10A together with the capstan 554. A guide roller 556 is provided on the downstream side of the screening roller 552e and is configured to adjust the tension of the optical fiber 10A by moving up and down according to the variation of the tension of the optical fiber 10A.

The bobbin 560 is provided, for example, on the downstream side of the guide roller 556 and is configured to wind the optical fiber 10A. The control unit 590 is configured to be, for example, connected to each of the units of the optical fiber production apparatus 50 and control these units. The control unit 590 is configured as, for example, a computer.

Here, in the present embodiment, in order to produce an optical fiber 10A that satisfies the above-mentioned requirement of the eccentric amount of the glass fiber 13, the optical fiber production apparatus 50 is configured, for example, as follows.

In the present embodiment, among all the rollers including the direct-under roller 552a and a plurality of guide rollers 552 downstream of the direct-under roller 552a, the circumferential length of the largest roller is, for example, 0.2 m or more. The circumferential length of the largest guide roller 552 is, for example, 0.9 m or less.

In the present embodiment, as shown in FIG. 7, the conveyance unit 550 has, for example, a vibration suppression unit 555. The vibration suppression unit 555 is provided, for example, downstream of the curing device 540 and upstream of the direct-under roller 552a located immediately below the curing device 540. The vibration suppression unit 555 is configured such that, for example, two rollers are in contact with the optical fiber 10A in different directions and suppress vibration of the optical fiber 10A. By suppressing vibration of the optical fiber 10A by using the vibration suppression unit 555, the position of the central axis of the glass fiber 13 can be maintained stably. That is, eccentricity of the glass fiber 13 can be suppressed.

In the present embodiment, as shown in FIG. 7, the direct-under roller 552a located immediately below the curing device 540 is fixed independently of other apparatus members related to the production of the optical fiber 10A. Specifically, the direct-under roller 552a is, for example fixed to the floor without being connected to other apparatus members. As the direct-under roller 552a is used in a state of being fixed independently of other apparatus members related to the production of the optical fiber 10A, the direct-under roller 552a can be suppressed from receiving vibration from other apparatus members. As a result, in a spectrum obtained by Fourier transforming the eccentric amount waveform of the glass fiber 13, the maximum value of the amplitude of the eccentric amount can be made small, and the wavelength at which the amplitude of the eccentric amount is the maximum can be made longer.

In the description given above, in order to produce an optical fiber 10A that satisfies the above-described requirement of the eccentric amount of the glass fiber 13, it is intended to carry out all of the following (x), (y), and (z); however, the invention is not limited to this case.

(x) Among all rollers including a direct-under roller 552a located immediately below a curing device 540 and a plurality of guide rollers 552 downstream of the direct-under roller 552a, the circumferential length of the largest roller is set to 0.2 m or more.

(y) Vibration of the optical fiber 10A is suppressed by a vibration suppression unit 555 provided downstream of the curing device 540 and upstream of the direct-under roller 552a located immediately below the curing device 540.

(z) The direct-under roller 552a located immediately below the curing device 540 is used in a state of being fixed independently of other apparatus members related to the production of the optical fiber 10A.

When at least any one of (x), (y), and (z) is carried out, the above-mentioned effect can be significantly obtained. However, the above-mentioned effect can be stably obtained when most of the above-described (x), (y), and (z) are carried out.

In the present embodiment, when a first eccentric amount of the glass fiber 13 from the central axis with respect to the outer periphery of the primary resin layer 14 is measured, and a second eccentric amount of the glass fiber 13 from the central axis with respect to the outer periphery of the secondary resin layer 15 is measured, both at a plurality of measurement points set at predetermined intervals in the axial direction of the glass fiber 13, the average value of the first eccentric amount may be smaller than the average value of the second eccentric amount. In this case, the eccentric amount of the primary resin layer 14 having a buffer effect becomes small, and the lateral pressure resistance characteristics are enhanced. The plurality of measurement points is, for example, 5 or more points.

Next, an Example of a second embodiment will be described. These Examples are only examples of the present disclosure, and the present disclosure is not intended to be limited by these Examples.

First, optical fibers of Sample Nos. 22 to 25 were produced under the conditions described in the following Table 8. Common conditions that are not described in Table 8 are as follows.

Outer diameter of glass fiber 13: 125 μm
Number of layers of coating resin layer 16A: 2 layers

[Measurement of eccentric amount]

The eccentric amount of the glass fiber 13 was measured at a plurality of measurement points set at predetermined intervals in the axial direction of the glass fiber 13 by using an eccentric amount variation observation apparatus, and thus a waveform of the eccentric amount with respect to the position of each of the plurality of measurement points was obtained. Subsequently, the eccentric amount waveform of the optical fiber 10A was subjected to Fourier transformation (FFT: fast fourier transformation), and a spectrum obtained by the Fourier transformation was analyzed. In the spectrum obtained by Fourier transforming the eccentric amount waveform as such, the "maximum value of the amplitude of the eccentric amount" and the "wavelength at which the amplitude of the eccentric amount is the maximum" were determined. The "wavelength at which the amplitude of the eccentric amount is the maximum" is described as "wavelength of maximum amplitude component" in the following description.

[Measurement of frequency of wire breaking]

During the production process for the optical fiber 10A of each of the above-mentioned samples, the optical fiber 10A was rewound by applying a tension of 1.5 kg, and the number of times of wire breaking of the optical fiber 10A was measured. For each of the samples, the frequency of wire breaking was determined as the number of times of wire breaking per 1000 kilometers (1 Mm). As a result, a case in which the frequency of wire breaking was less than 5 times/Mm was rated as "satisfactory", and a case in which the frequency of wire breaking was 5 or more times/Mm was rated as "defective". The results obtained by performing an evaluation of each of the samples will be described with reference to the following Table 8.

[Table 8]

| Sample No. | Production conditions | | | | Evaluation results | | |
|---|---|---|---|---|---|---|---|
| | Outer periphery diameter of resin coating layer | Circumferential length of largest guide roller | Vibration control unit | Independent fixing of direct-under roller | Maximum value of amplitude of eccentric amount | Wavelength of maximum amplitude component | Frequency of wire breaking (times/Mm) |
| 22 | 170 μm | 0.3 m | Present | Present | 0.9 μm | 0.42 m | 0.1 |
| 23 | 170 μm | 0.2 m | Present | Present | 3.6 μm | 0.12 m | 1.8 |
| 24 | 170 μm | 0.2 m | Absent | Present | 5.2 μm | 0.13 m | 2.0 |
| 25 | 170 μm | 0.2 m | Absent | Absent | 6.0 μm | 0.1 m | 4.1 |

With regard to Sample Nos. 22 to 25, in the spectra obtained by Fourier transforming the eccentric amount waveform, the maximum value of the amplitude of the eccentric amount was 6 μm or less. In the spectra obtained by Fourier transforming the eccentric amount waveform, the wavelength at which the amplitude of the eccentric amount was the maximum was 0.1 m or more.

As a result, with regard to Sample Nos. 22 to 25, the optical fiber 10A was less likely to break, and the frequency of wire breaking was less than 5 times/Mm. With regard to Sample Nos. 22 to 25, since the circumferential length of the largest guide roller was set to 0.2 m or more, the optical fiber 10A could be stably conveyed by means of this largest guide roller. With regard to Sample Nos. 22 and 23, as a result of providing the vibration suppression unit 555, when coating with the coating resin layer 16A, the position of the central axis of the glass fiber 13 could be stably maintained due to the vibration from the conveyance unit 550. With regard to Sample Nos. 22 to 24, an increase in the vibration of the direct-under roller 552a and shortening of the period could be suppressed by using the direct-under roller 552a in a state of being fixed independently of other apparatus members.

Due to these, with regard to Sample Nos. 22 to 25, in the spectra obtained by Fourier transforming the eccentric amount waveform, the maximum value of the amplitude of the eccentric amount could be made smaller, and the wavelength at which the amplitude of the eccentric amount was the maximum could be made longer. As a result, with regard to Sample Nos. 22 to 25, it was confirmed that despite having small diameters, the frequency of wire breaking could be lowered.

(Third Embodiment)

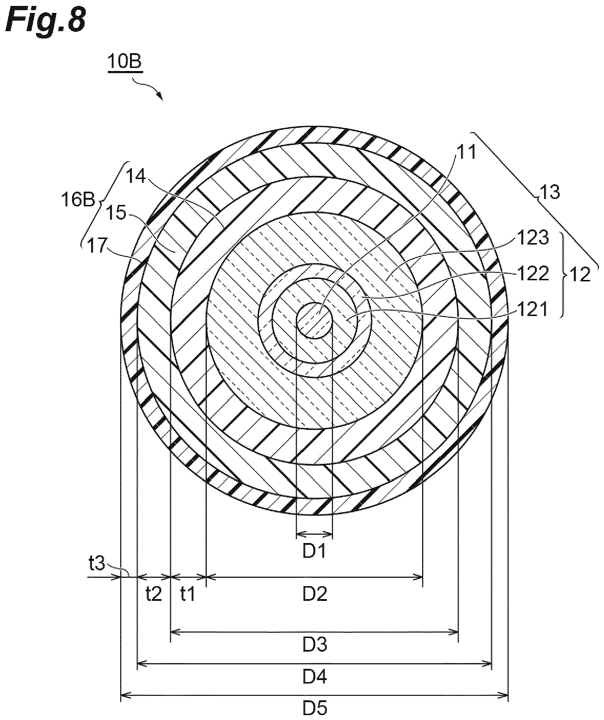

FIG. 8 is a diagram illustrating a cross-section perpendicular to the axial direction of an optical fiber 10B according to a third embodiment. The optical fiber 10B is a so-called optical fiber core line and includes a glass fiber 13 including a core 11 and a cladding 12; and a coating resin layer 16B including a primary resin layer 14, a secondary resin layer 15, and a colored layer 17 (first colored layer) provided on the outer periphery of the glass fiber 13. Among these constituent elements, the structures and characteristics of the glass fiber 13 and the secondary resin layer 15 are similar to those of the above-mentioned first embodiment.

The colored layer 17 is in contact with the outer peripheral surface of the secondary resin layer 15 and surrounds the entirety of the secondary resin layer 15. The colored layer 17 constitutes the outermost layer of the coating resin layer 16B. The colored layer 17 is formed from, for example, an ultraviolet-cured resin including a pigment. The thickness t3 of the colored layer 17 is 3.0 μm or more and 10.0 μm or less. The outer diameter D5 of the colored layer 17, that is, the outer diameter of the coating resin layer 16B, is 180 μm ± 5 μm, that is, 175 μm or more and 185 μm or less. The colored layer 17 is formed from a cured product of a resin composition including a colored ink. When the coating resin layer 16B has a colored layer 17 as is the case of the present embodiment, identification of the optical fiber 10B is made easier by the colored layer 17.

When the thickness t3 of the colored layer 17 is 3.0 μm or more, the color of the core line in the external appearance becomes sufficiently dark, and the identifiability is enhanced. In addition, color unevenness caused by the vibration of the optical fiber 10B in the production process can be suppressed. Since a pigment is included in the colored layer 17, when the colored layer 17 has an excessive thickness, ultraviolet radiation for curing the colored layer 17 does not sufficiently reach to the core part of the colored layer 17, and there is a risk that the colored layer 17 may be insufficiently cured. When curing of the colored layer 17 is insufficient, the adhesive force between the colored layer 17 and the secondary resin layer 15 is decreased, and at the time of peeling a tape material, there occurs so-called "color peeling", in which the colored layer 17 is not separated from the tape material but is separated from the secondary resin layer 15. When the thickness t3 of the colored layer 17 is 10.0 μm or less, ultraviolet radiation for curing the colored layer 17 sufficiently reaches to the core part of the colored layer 17, and the above-mentioned "color peeling" can be reduced.

In the optical fiber 10B of the present embodiment, the Young's modulus of the primary resin layer 14 becomes slightly larger compared with the first embodiment, as a result of irradiation with ultraviolet radiation for curing the colored layer 17. This is speculated to be because the primary resin layer 14 is further cured by the irradiation with ultraviolet radiation for curing the colored layer 17.

That is, with regard to the optical fiber 10B of the present embodiment, the Young's modulus of the primary resin layer 14 may be 0.10 MPa or greater and 0.40 MPa or less at 23°C. When the Young's modulus of the primary resin layer 14 is 0.10 MPa or greater, coating cracks called voids and peeling (delamination) of the coating are less likely to occur in the primary resin layer 14 at a screening tension of 1.5 kg or greater. This optical fiber 10B has no problem with low-temperature characteristics. When the Young's modulus of the primary resin layer 14 is 0.40 MPa or less, especially excellent lateral pressure resistance characteristics are obtained within the range of the thickness t1 of the primary resin layer 14 described in the first embodiment. In the following description, an optical fiber 10B including a primary resin layer 14 having a Young's modulus of 0.10 MPa or greater and 0.40 MPa or less may be referred to as a lateral pressure resistance-specialized type optical fiber. This optical fiber has a colored layer on two coating layers.

According to another aspect of the present embodiment, the Young's modulus of the primary resin layer 14 may be 0.40 MPa or greater and 0.60 MPa or less at 23°C. When the Young's modulus of the primary resin layer 14 is 0.40 MPa or greater, coating cracks called voids and peeling (delamination) of the coating are less likely to occur in the primary resin layer 14 at a screening tension of 2.0 kg or greater, wire breaking is further less likely to occur during tape formation and cable formation, and productivity is enhanced. When the Young's modulus of the primary resin layer 14 is 0.60 MPa or less, sufficient lateral pressure resistance characteristics are obtained within the range of the thickness t1 of the primary resin layer 14 described in the first embodiment. In the following description, an optical fiber 10B including a primary resin layer 14 having a Young's modulus of 0.40 MPa or greater and 0.60 MPa or less may be referred to as a high screening tension type optical fiber. This optical fiber has a colored layer on two coating layers.

According to the present embodiment, the structure and characteristics of the primary resin layer 14 except for the Young's modulus are similar to those of the above-mentioned first embodiment.

Hereinafter, the results of an evaluation test according to the third embodiment will be shown. The present invention is not intended to be limited to these Examples.

A plurality of samples of the optical fiber 10B were produced by forming a primary resin layer 14 on the outer periphery of a glass fiber 13 composed of a core 11 and a cladding 12 and having a diameter of 125 μm, further forming a secondary resin layer 15 on the outer periphery of the primary resin layer 14, and further forming a colored layer 17 on the outer periphery of the secondary resin layer 15. The following Table 9 is a table indicating the outer diameter, thickness, and Young's modulus at 23°C of the primary resin layer 14, the outer diameter, thickness, and Young's modulus at 23°C of the secondary resin layer 15, the outer diameter of the colored layer 17, the lateral pressure resistance characteristics, the screening tension, and other characteristics for each of the produced samples. The structure of the glass fiber 13 of sample number 26, 27 was the same as sample number 1 in Table 1, and the structure of the glass fiber 13 of sample number 29 was the same as sample number 2 in Table 1.

[Table 9]

| Sample No. | | 26 | 27 | 28 |
|---|---|---|---|---|
| Outer diameter [μm] | Primary | 160 | 140 | 160 |
| | Secondary | 170 | 170 | 170 |
| | Colored Layer | 180 | 180 | 180 |
| Thickness [μm] | Primary | 17.5 | 7.5 | 17.5 |
| | Secondary | 5 | 15 | 5 |
| Young's modulus [MPa] | Primary | 0.60 | 0.50 | 0.40 |
| | Secondary | 2800 | 2800 | 1200 |
| Lateral pressure resistance characteristics | | A | A | A |
| Screening tension | | A | A | A |

The compositions of the primary resin layer 14 and the secondary resin layer 15 of sample number 26 are the same as those of the resin P3 and the resin S2 in the first embodiment, respectively. The compositions of the primary resin layer 14 and the secondary resin layer 15 of sample number 27 are the same as those of the resin P2 and resin S2 in the first embodiment, respectively. The compositions of the primary resin layer 14 and the secondary resin layer 15 of sample number 28 are the same as those of the resin P2 and resin S1 in the first embodiment, respectively.

Separately from the above, a plurality of samples of the optical fiber were produced by forming the primary resin layer 14 on the outer periphery of a glass fiber having a diameter of 125 μm and having a cladding composed of a single composition in place of the cladding 12 of the present embodiment, further forming the secondary resin layer 15 on the periphery of the primary resin layer 14, and more further forming the colored layer 17 on the periphery of the secondary resin layer 15. Quartz glass doped with fluorine was used for the cladding. The following Table 10 and Table 11 are tables showing the outer diameter, thickness, and Young's modulus at 23°C of the primary resin layer 14, the outer diameter, thickness, and Young's modulus at 23°C of the secondary resin layer 15, the outer diameter of the colored layer 17, the lateral pressure resistance characteristics, screening tension, and other characteristics.

[Table 10]

|  |  | Lateral pressure resistance-specialized type | | | | | High screening tension type | | | |
|---|---|---|---|---|---|---|---|---|---|---|
| Sample No. |  | 29 | 30 | 31 | 32 | 33 | 34 | 35 | 36 | 37 |
| Outer diameter [μm] | Primary | 150 | 160 | 140 | 140 | 160 | 150 | 160 | 140 | 160 |
|  | Secondary | 170 | 170 | 170 | 175 | 170 | 170 | 170 | 170 | 170 |
|  | Colored layer | 180 | 180 | 180 | 180 | 180 | 180 | 180 | 180 | 180 |
| Thickness [μm] | Primary | 12.5 | 17.5 | 7.5 | 7.5 | 17.5 | 12.5 | 17.5 | 7.5 | 17.5 |
|  | Secondary | 10 | 5 | 15 | 17.5 | 5 | 10 | 5 | 15 | 5 |
| Young's modulus [MPa] | Primary | 0.25 | 0.15 | 0.10 | 0.10 | 0.40 | 0.50 | 0.60 | 0.50 | 0.40 |
|  | Secondary | 1200 | 1200 | 2800 | 2800 | 2800 | 2000 | 2800 | 2800 | 1200 |
| Lateral pressure resistance characteristics |  | A | A | A | A | A | B | B | B | B |
| Screening tension |  | B | B | B | B | B | A | A | A | A |
| Other characteristics |  | - | - | - | - | - | - | - | - | - |

[Table 11]

|  |  | Reference Example | | | | |
|---|---|---|---|---|---|---|
| Sample No. |  | 38 | 39 | 40 | 41 | 42 |
| Outer diameter [μm] | Primary | 150 | 165 | 135 | 150 | 150 |
|  | Secondary | 170 | 170 | 170 | 170 | 170 |
|  | Colored layer | 180 | 180 | 180 | 180 | 180 |
| Thickness [μm] | Primary | 12.5 | 20 | 5 | 12.5 | 12.5 |
|  | Secondary | 10 | 2.5 | 17.5 | 10 | 10 |
| Young's modulus [MPa] | Primary | 0.75 | 0.15 | 0.25 | 0.15 | 0.08 |
|  | Secondary | 1200 | 2800 | 1200 | 2900 | 1100 |
| Lateral pressure resistance characteristics |  | C | A | C | A | A |
| Screening tension |  | A | C | A | C | C |

(continued)

| | Reference Example | | | | |
|---|---|---|---|---|---|
| Sample No. | 38 | 39 | 40 | 41 | 42 |
| Other characteristics | - | Multiple occurrence s of wire breaking | - | Secondary cracking and defective external appearance | - |

In the present Example, the specific compositions of the primary resin layer 14 and the secondary resin layer 15 are similar to those of the Example of the First Embodiment. However, the Young's modulus of the primary resin layer 14 becomes slightly (up to 0 MPa to about 0.1 MPa) larger than the Example of the First Embodiment, as a result of irradiation with ultraviolet radiation at the time of curing the colored layer 17. The method for measuring the Young's moduli of the primary resin layer 14 and the secondary resin layer 15, the measurement method and the evaluation criteria for the lateral pressure resistance characteristics, and the measurement method and the evaluation criteria for the screening tension are similar to the Example of the First Embodiment.

According to this Example, when the thickness of the primary resin layer 14 is 7.5 $\mu$m or more and 17.5 $\mu$m or less, the thickness of the secondary resin layer 15 is 5.0 $\mu$m or more and 17.5 $\mu$m or less, the Young's modulus of the primary resin layer is 0.10 MPa or greater and 0.60 MPa or less, and the Young's modulus at 23°C of the secondary resin layer is 1200 MPa or greater and 2800 MPa or less, the rating for the lateral pressure resistance characteristics is A or B, while the rating for the screening tension is A or B, and it is possible to provide an optical fiber having a reduced diameter and excellent tensile strength resistance (low-temperature characteristics) while suppressing deterioration of lateral pressure resistance characteristics. In particular, in Table 9, that is, in a case where the optical fiber includes the glass fiber 13 of the first embodiment, the evaluations of the lateral pressure resistance characteristics and the screening tensile strength are both A. Thus, it is possible to provide an optical fiber having a reduced diameter and excellent tensile strength resistance (low-temperature characteristics) while significantly suppressing deterioration of the lateral pressure resistance characteristics. As shown in Table 10, when the Young's modulus of the primary resin layer is 0.10 MPa or greater and 0.40 MPa or less, a lateral pressure resistance-specialized type optical fiber whose rating for the lateral pressure resistance characteristics is A, can be provided. When the Young's modulus of the primary resin layer is 0.40 MPa or greater and 0.60 MPa or less, a high screening tension type optical fiber, that is, low-temperature characteristics-specialized type optical fiber, whose rating for the screening tension is A, can be provided. As the screening tension is higher, the optical fiber is less likely to break in a tape-forming step, which is a subsequent step, and the product yield for a multicore cable is enhanced.

As shown in Table 11, when the thickness of the secondary resin layer 15 is set to be less than 5.0 $\mu$m, wire breaking of the optical fiber 10B occurred multiple times. When the Young's modulus of the secondary resin layer 15 is greater than 2800 MPa, the coating became brittle, cracking occurred in the secondary resin layer 15, and the optical fiber had defective external appearance.

(Modification Example)

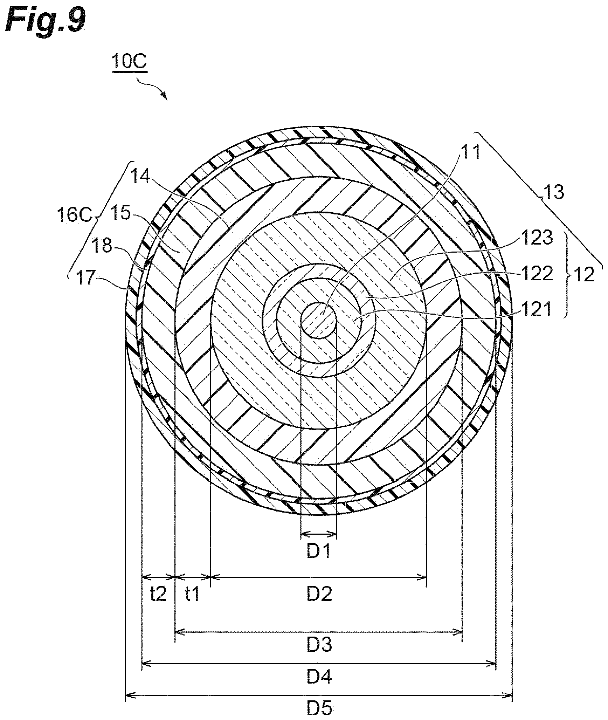

FIG. 9 is a diagram illustrating a cross-section perpendicular to the axial direction of an optical fiber 10C as a Modification Example of the third embodiment. The optical fiber 10C includes a coating resin layer 16C instead of the coating resin layer 16B of the third embodiment. The coating resin layer 16C further has a colored layer 18 (second colored layer) in addition to the configuration of the coating resin layer 16B of the third embodiment. The colored layer 18 is a resin layer that is formed between the secondary resin layer 15 and the colored layer 17 and has a color different from that of the colored layer 17. The colored layer 18 includes a plurality of ring patterns formed to be arranged mutually at an interval in the axial direction of the glass fiber 13. The colored layer 18 is formed by, for example, an inkjet method of injecting a solvent dilution type ink. Since a solvent dilution type ink has a property of being removed by wiping by means of an alcohol or the like, the colored layer 18 is formed on the outer surface of the secondary resin layer 15, and the colored layer 17 is formed thereon to surround the colored layer 18. The colored layer 18 is a layer in which the thickness is discontinuous in the length direction of the optical fiber. When the optical fiber 10C is viewed along the length direction, there are also sites without the colored layer 18.

According to the present Modification Example, the number of identifiable colors of the optical fiber core line can be increased as many as the number of combinations of the number of colors of the colored layer 17 and the number of colors of the colored layer 18. Therefore, the number of identifiable colors of the optical fiber core line can be remarkably increased.

**Reference Signs List**

10A, 10B, 10C: optical fiber
11: core
12: cladding
13: glass fiber
14: primary resin layer
15: secondary resin layer
16A, 16B, 16C: coating resin layer
17: colored layer (first colored layer)
18: colored layer (second colored layer)
50: optical fiber production apparatus
121: inner cladding
122: trench
123: outer cladding
510: wire drawing furnace
512: gripping mechanism
514: furnace core tube
516: heat generator
518: gas supply unit
522: fiber position measuring unit
523: cooling device
524: outer diameter measuring unit
530: resin coating device
540: curing device
550: conveyance unit
552: guide roller
552a: direct-under roller
552b: guide roller
552c, 552d, 552e: screening roller
554: capstan
555: vibration suppression unit
556: guide roller
560: bobbin
590: control unit
G: glass parent material
GC, RC: central axis

**Claims**

1. An optical fiber comprising:

a glass fiber including a core and a cladding, the cladding including an inner cladding surrounding an outer periphery of the core, a trench surrounding an outer periphery of the inner cladding, and an outer cladding surrounding an outer periphery of the trench, the inner cladding having a refractive index lower than a refractive index of the core, the trench having a refractive index lower than the refractive index of the inner cladding, and the outer cladding having a refractive index higher than the refractive index of the trench and lower than the refractive index of the core, the core being doped with germanium, the inner cladding having an average chlorine mass concentration of 500 ppm or more and 5000 ppm or less, $r2/r1$ being 2.2 or more and 3.6 or less, $r3 - r2$ being 3 $\mu$m or more and 10 $\mu$m or less, $\Delta1 - \Delta2$ being 0.15% or more and 0.40% or less, $|\Delta2|$ being 0.10% or less, and $\Delta3$ being -0.70% or more and-0.10% or less, where $\Delta1$ is a relative refractive index difference of the core with respect to the refractive index of the outer cladding, $\Delta2$ is a relative refractive index difference of the inner cladding with respect to the refractive index of the outer cladding, $\Delta3$ is a relative refractive index difference of the trench with respect to the refractive index of the outer cladding, $r1$ is a radius of the outer periphery of the core, $r2$ is a radius of the outer periphery of the inner cladding, and $r3$ is a radius of the outer periphery of the trench,

wherein a mode field diameter for light at a wavelength of 1310 nm is 8.8 μm or more and 9.6 μm or less, and

wherein a bending loss for light at a wavelength of 1625 nm is 1.0 dB or less per turn when the optical fiber is wound on a mandrel having a diameter of 15 mm,

wherein a bending loss for light at a wavelength of 1625 nm is 0.1 dB or less per 10 turns when the optical fiber is wound on a mandrel having a diameter of 30 mm,

wherein a zero-dispersion wavelength is 1300 nm or more and 1324 nm or less,

wherein a cable cutoff wavelength is 1260 nm or less.

2. The optical fiber according to claim 1,
wherein a bending loss for light at a wavelength of 1625 nm is $1.0 \times 10^{-4}$ dB or less per turn when the optical fiber is wound on a mandrel having a diameter of 100 mm.

3. The optical fiber according to claim 1 or claim 2,

wherein a wavelength dispersion of the optical fiber for light at a wavelength of 1550 nm is 18.6 ps/(nm·km) or less, and

wherein a zero-dispersion slope of the optical fiber is 0.092 ps/(nm²·km) or less.

4. The optical fiber according to any one of claim 1 to claim 3,
wherein a transmission loss of the optical fiber for light at a wavelength of 1383 nm is 0.35 dB/km or less.

5. The optical fiber according to any one of claim 1 to claim 4,
wherein 3σ is 0.1 μm or more and 0.5 μm or less, where σ is a standard deviation of an outer diameter variation in an axial direction of the glass fiber.

6. The optical fiber according to any one of claim 1 to claim 5,

wherein an average chlorine mass concentration of the outer cladding is substantially zero, and

wherein an average OH mass concentration of the outer cladding is 5 ppm or more and 500 ppm or less.

7. The optical fiber according to any one of claim 1 to claim 6, further comprising:
a coating resin layer coating an outer periphery of the glass fiber, the coating resin layer including a primary resin layer in contact with the glass fiber and surrounding the glass fiber and a secondary resin layer coating an outer periphery of the primary resin layer, a thickness of the primary resin layer being 7.5 μm or more and 17.5 μm or less, a Young modulus of the primary resin layer being 0.10 MPa or greater and 0.50 MPa or less at 23°C, a thickness of the secondary resin layer being 5.0 μm or more and 17.5 μm or less, an outer diameter of the secondary resin layer being 165 μm or more and 175 μm or less, a Young modulus of the secondary resin layer being 1200 MPa or greater and 2800 MPa or less at 23°C.

8. The optical fiber according to any one of claim 1 to claim 6, further comprising:
a coating resin layer coating an outer periphery of the glass fiber, the coating resin layer including a primary resin layer in contact with the glass fiber and surrounding the glass fiber, a secondary resin layer coating an outer periphery of the primary resin layer, and a first colored layer coating an outer periphery of the secondary resin layer, a thickness of the primary resin layer being 7.5 μm or more and 17.5 μm or less, a Young modulus of the primary resin layer being 0.10 MPa or greater and 0.60 MPa or less at 23°C, a thickness of the secondary resin layer being 5.0 μm or more and 17.5 μm or less, an outer diameter of the secondary resin layer being 165 μm or more and 175 μm or less, a Young modulus of the secondary resin layer being 1200 MPa or greater and 2800 MPa or less at 23°C.

9. The optical fiber according to claim 8,
wherein the coating resin layer further includes a second colored layer formed between the secondary resin layer and the first colored layer, having a color different from that of the first colored layer, and including a plurality of ring patterns formed at intervals in an axial direction of the glass fiber.

10. The optical fiber according to any one of claim 7 to claim 9,
wherein in a spectrum obtained by measuring an amount of eccentricity of the glass fiber from a central axis with reference to an outer periphery of the secondary resin layer at a plurality of measurement points set at predetermined intervals in an axial direction of the glass fiber and performing Fourier transform on a waveform indicating the amount of eccentricity at each of the plurality of measurement points, a maximum value of an amplitude of the amount of eccentricity is 6 $\mu$m or less.

# Fig.1

*Fig.2*

## Fig.3

Fig.4

Fig.5

**Fig.6**

## Fig.7

EP 4 398 008 A1

50

# Fig.8

# Fig.9

## INTERNATIONAL SEARCH REPORT

| International application No. |
|---|
| **PCT/JP2022/032650** |

| A. | CLASSIFICATION OF SUBJECT MATTER |
|---|---|

*G02B 6/036*(2006.01)i; *G02B 6/44*(2006.01)i
FI:  G02B6/036; G02B6/44 301A

According to International Patent Classification (IPC) or to both national classification and IPC

| B. | FIELDS SEARCHED |
|---|---|

Minimum documentation searched (classification system followed by classification symbols)

G02B6/02-6-10; G02B6/44; G01M11/00-11/08

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | WO 2004/092794 A1 (FUJIKURA LTD.) 28 October 2004 (2004-10-28)<br>    p. 6, line 18 to p. 24, line 12, fig. 1-5 | 1-10 |
| Y | JP 2012-078804 A (SHIN-ETSU CHEMICAL CO., LTD.) 19 April 2012 (2012-04-19)<br>    paragraph [0037] | 1-10 |
| Y | JP 2018-077303 A (SUMITOMO ELECTRIC INDUSTRIES, LTD.) 17 May 2018<br>(2018-05-17)<br>    paragraphs [0021]-[0056], fig. 1 | 7-10 |
| Y | JP 2018-062448 A (SUMITOMO ELECTRIC INDUSTRIES, LTD.) 19 April 2018<br>(2018-04-19)<br>    paragraph [0015], fig. 1 | 8-10 |
| Y | WO 2015/174182 A1 (SUMITOMO ELECTRIC INDUSTRIES, LTD.) 19 November 2015<br>(2015-11-19)<br>    paragraphs [0047]-[0050], fig. 1-2 | 9-10 |
| Y | JP 2014-066558 A (FUJIKURA LTD.) 17 April 2014 (2014-04-17)<br>    paragraphs [0016]-[0027], fig. 1-3 | 10 |

☑ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **28 October 2022** | **15 November 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

| International application No. |
| --- |
| **PCT/JP2022/032650** |

**C.    DOCUMENTS CONSIDERED TO BE RELEVANT**

| Category* | Citation of document, with indication, where appropriate, of the relevant passages | Relevant to claim No. |
| --- | --- | --- |
| A | WO 2016/017743 A1 (FUJIKURA LTD.) 04 February 2016 (2016-02-04)<br>entire text, all drawings | 1-10 |
| A | WO 2020/162209 A1 (FURUKAWA ELECTRIC CO., LTD.) 13 August 2020 (2020-08-13)<br>entire text, all drawings | 1-10 |
| A | JP 2020-530586 A (CORNING INCORPORATED) 22 October 2020 (2020-10-22)<br>entire text, all drawings | 1-10 |
| A | US 2021/0041623 A1 (CORNING INCORPORATED) 11 February 2021 (2021-02-11)<br>entire text, all drawings | 1-10 |
| A | US 2020/0310056 A1 (CORNING RESEARCH & DEVELOPMENT CORPORATION) 01<br>October 2020 (2020-10-01)<br>entire text, all drawings | 1-10 |

Form PCT/ISA/210 (second sheet) (January 2015)

International application No.

**PCT/JP2022/032650**

| Patent document cited in search report | | | Publication date (day/month/year) | Patent family member(s) | | | Publication date (day/month/year) |
|---|---|---|---|---|---|---|---|
| WO | 2004/092794 | A1 | 28 October 2004 | US 2006/0039665 A1 paragraphs [0022]-[0120], fig. 1-5 | | | |
| | | | | EP | 1657575 | A1 | |
| | | | | KR 10-2006-0009839 | | A | |
| | | | | CN | 1768282 | A | |
| JP | 2012-078804 | A | 19 April 2012 | US 2012/0057834 A1 paragraph [0059] | | | |
| | | | | EP | 2426533 | A2 | |
| | | | | CN | 102385103 | A | |
| JP | 2018-077303 | A | 17 May 2018 | US 2018/0128970 A1 paragraphs [0021]-[0060], fig. 1 | | | |
| | | | | GB | 2558989 | A | |
| | | | | FR | 3058410 | A1 | |
| | | | | CN | 108072931 | A | |
| | | | | KR 10-2018-0051420 | | A | |
| | | | | RU | 2017138532 | A | |
| JP | 2018-062448 | A | 19 April 2018 | US 2018/0105462 A1 paragraphs [0040]-[0042], fig. 1 | | | |
| | | | | GB | 2557713 | A | |
| | | | | FR | 3057676 | A1 | |
| | | | | CN | 107942432 | A | |
| WO | 2015/174182 | A1 | 19 November 2015 | JP | 2015-219355 | A | |
| | | | | KR 10-2017-0007251 | | A | |
| JP | 2014-066558 | A | 17 April 2014 | (Family: none) | | | |
| WO | 2016/017743 | A1 | 04 February 2016 | US 2016/0209585 A1 entire text, all drawings | | | |
| | | | | EP | 3037855 | A1 | |
| | | | | CN | 105556353 | A | |
| WO | 2020/162209 | A1 | 13 August 2020 | US 2021/0364692 A1 entire text, all drawings | | | |
| | | | | EP | 3922612 | A1 | |
| | | | | JP | 2020-129037 | A | |
| JP | 2020-530586 | A | 22 October 2020 | US 2019/0049660 A1 entire text, all drawings | | | |
| | | | | WO | 2019/032408 | A1 | |
| | | | | EP | 3441807 | A1 | |
| | | | | NL | 2019817 | B1 | |
| | | | | CN | 111033334 | A | |
| US | 2021/0041623 | A1 | 11 February 2021 | WO | 2021/025858 | A1 | |
| US | 2020/0310056 | A1 | 01 October 2020 | WO | 2020/197709 | A1 | |
| | | | | AU | 2020247710 | A1 | |
| | | | | CA | 3135287 | A1 | |

**EP 4 398 008 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021141607 A
- JP 2020129037 A
- WO 2017172714 A
- WO 2010053356 A
- US 20210041623